# EUROPÄISCHE PATENTSCHRIFT

(11) **EP 4 149 708 B1**
(45) Veröffentlichungstag und Bekanntmachung des Hinweises auf die Patenterteilung: **10.01.2024**
(21) Anmeldenummer: 21727397.8
(22) Anmeldetag: 14.05.2021
(51) Int. Cl.: B23K 3/08, B23K 26/70, B22F 3/10, B22F 12/20

(54) **ANLAGE ZUM VERBINDEN VON ELEKTRONISCHEN BAUGRUPPEN**
SYSTEM FOR CONNECTING ELECTRONIC ASSEMBLIES
INSTALLATION POUR RELIER DES COMPOSANTS ÉLECTRONIQUES

(30) Priorität: 15.05.2020 DE 102020113320; 23.07.2020 DE 102020119527
(43) Veröffentlichungstag der Anmeldung: 22.03.2023
(73) Patentinhaber: PINK GmbH Thermosysteme, 97877 Wertheim (DE)
(72) Erfinder: KREBS, Thomas, 97877 Wertheim (DE); OETZEL, Christoph, 97896 Freudenberg-Boxtal (DE)
(74) Vertreter: Spachmann, Holger
(86) Internationale Anmeldenummer: PCT/EP2021/062871
(87) Internationale Veröffentlichungsnummer: WO 2021/229073

(56) Entgegenhaltungen:
- EP-A2- 0 427 020
- EP-B1- 0 427 020
- DE-A1- 19 953 654
- DE-A1-102014 106 631
- DE-C1- 3 843 191
- DE-C2- 3 843 191
- US-A- 4 932 864
- US-A1- 2011 039 219

## Beschreibung

Die Erfindung betrifft eine Anlage zum Verbinden von elektronischen Baugruppen, insbesondere eine Löt- oder Sinteranlage mit einer Transportvorrichtung zum Transport der elektronischen Baugruppen durch die Anlage, umfassend mehrere, gasdicht abtrennbare Module zum Verbinden der elektronischen Baugruppen miteinander, wobei zumindest ein Modul als Löt- oder Sintermodul und ein Modul als Kühlmodul ausgebildet ist.

### STAND DER TECHNIK

Aus dem Stand der Technik sind eingangs genannte Anlagen zur Temperaturbehandlung von Bauteilen mit Gasdichte verschließbaren Kammern bzw. Modulen bekannt.

Eine derartige Anlage kann beispielsweise als eine Lötvorrichtung zum Herstellen einer Lötverbindung zwischen mehreren Bauteilen, insbesondere elektronischen Baugruppen, ausgebildet sein. Diese kann durch Erhitzen und Aufschmelzen von Lotmaterial, welches zwischen den zu verbindenden Bauteilen angeordnet ist, und/oder zum Überziehen eines Bauteils mit Lotmaterial für einen nachfolgenden Verbindungsprozess, ausgestaltet sein. In der Regel werden die Bauteile und das Lotmaterial, welches beispielsweise in Form von Lötplättchen, als Lotpaste oder als Lotpulver vorliegen kann, vor dem Einbringen in die Prozesskammer zu einem Stapel temporär zusammengefügt.

Mithilfe einer derartigen Lötvorrichtung werden insbesondere großflächige Verbindungen hergestellt, bei denen beispielsweise Halbleiterbauelemente, Mikroelektronikbauteile oder Leistungshalbleiterchips, wie z. B. Transistoren oder Dioden auf Leiterplatten, IGBTs, MOSFETs oder Dioden auf metallisierte Keramiksubstrate oder sonstige Schaltungsträger gelötet bzw. miteinander verlötet werden, oder bei denen metallisierte Keramiksubstrate auf metallische Grundplatten und/oder Kühlkörper gelötet werden. Auch Leiterplatten, welche mit Kühlkörpern verbunden werden sollen, können in einer gattungsgemäßen Lötvorrichtung gelötet werden.

Um ein optimales Lötergebnis zu erzielen, wird angestrebt, das aufgeschmolzene Lot zusammen mit den zu verbindenden Bauteilen kontrolliert über den Schmelzpunkt des Lotes zu erwärmen und anschließend kontrolliert unter den Erstarrungspunkt des Lotes abzukühlen, um die Bauteile lunkerfrei miteinander zu verbinden. Das Lot kann ein Weich- oder ein Hartlot sein, inbesondere ein Zinnlot, aber auch ein Silberlot, Messinglot oder Phosphorlot.

Das Herstellen von Lötverbindungen erfolgt in der Regel in einer von der Umgebung abgeschlossenen, insbesondere evakuierbaren Prozesskammer, in welcher zum Beispiel eine Basisplatte und eine Andruckplatte angeordnet sein können, zwischen denen eine das oder die Bauteile und das Lotmaterial umfassende Lötgruppe aufgenommen ist. Die Basisplatte und die Andruckplatte können zum Ausüben einer Presskraft auf die Lötgruppe relativ zueinander bezüglich ihres Abstandes verstellbar sein. Zugleich können die Andruckplatte und/oder die Basisplatte das Erhitzen und/oder das Abkühlen der Bauelemente und des Lotmaterials bewirken. Hierzu können die genannten Platten mit entsprechenden Wärmequellen und/oder Wärmesenken thermisch gekoppelt sein.

Eine derartige Anlage kann auch als eine Sintervorrichtung zum Herstellen eines Werkstücks aus zumindest einer Komponente mittels Drucksintern, insbesondere mittels Niedertemperaturdrucksintern, ausgestaltet sein. Eine derartige Sintervorrichtung kann ein Oberwerkzeug und ein Unterwerkzeug, zwischen denen die zumindest eine Komponente aufgenommen ist, wobei das Oberwerkzeug und das Unterwerkzeug zum Aufbringen einer Presskraft auf das zu sinternde Werkstück relativ zueinander verstellbar sind, und zumindest eine Heizvorrichtung zum Erwärmen des zu sinternden Werkstücks umfassen.

In derartigen Sintervorrichtungen kann unter der Einwirkung von Hitze und Druck aus einem sogenannten Grünkörper, der aus einem fein- oder grobkörnigen Stoff oder Stoffgemisch besteht, ein festes Werkstück erzeugt werden. Neben dem Verpressen und Verdichten des Sintermaterials werden dabei die kontaktierten Flächen der Verbindungspartner mechanisch, thermisch und ggf. elektrisch verbunden. Der hier betrachtete Einsatz dient insbesondere zum mechanischen und elektrisch und/oder thermisch leitenden Verbinden zweier Bauteile, insbesondere elektrischer Halbleiterbauteile wie Hochleistungsschaltelemente oder Halbleiterbaugruppen und einem Grundkörper, in der Regel einer Platine, insbesondere eines DCBs/AMB'S Leadframes (Direct Copper Bonded / Active Metal Braze auf einem metallischen Leitungsträger bzw. Anschluss-Rahmens), einem Kühlkörper oder dergleichen.

Weiterhin können bei einer Variante des Drucksinterns, dem NiedertemperaturDrucksintern, zwei oder mehr Bauelemente, insbesondere elektronische Bauelemente und Substrate, mittels eines Fügewerkstoffs miteinander, insbesondere elektrisch und/oder thermisch leitend, verbunden werden, wobei hierbei der verbindende Fügewerkstoff gesintert wird. Eine entsprechende Vorrichtung und ein Verfahren sind beispielsweise aus der DE 10 2008 009 510 B3 bekannt.

Weitere Anlagen können als automatischen Sinter- oder Lötanlagen, insbesondere automatischen Mehrkammer-Anlagen mit mehreren Prozesskammern, ausgebildet sein. Diese umfassen zumindest eine Kammer bzw. ein Modul zum elektrischen und/oder thermischen Verbinden eines elektrischen Bauteils mit einer weiteren Bauteilgruppe, einer elektrischen Platine oder DCBs/AMB'S Leadframes oder einem Kühlkörper.

Unter dem Begriff "Bauteile" können allgemein elektronische Baugruppen, Schaltungsträger, Substrate, Substratträger, Grundplatten, Werkstückträger, Montageträger oder dergleichen aus Metall, Keramik, Kunststoff oder anderen Materialien oder beliebigen Materialkombinationen sowie darauf zu befestigende Bauelemente wie Leistungshalbleiterchips, (Halbleiter-) Baugruppen oder dergleichen verstanden werden.

Oftmals werden Werkstückträger verwendet, welche mehrere Bauteile bzw. Bauteilgruppen zugleich aufnehmen können, wodurch die Handhabung vereinfachen und die Durchsatzraten erhöht werden kann.

Derartige Anlagen können zumindest eine gasdicht verschließbare Prozesskammer aufweisen, in welcher die Bauteile während der Temperaturbehandlung aufgenommen sind. In dieser Prozesskammer kann eine spezifische Prozessatmosphäre bereitgestellt werden, die unerwünschte chemische Reaktionen, insbesondere eine Oxidation von metallischen Oberflächen des Werkstücks, reduziert oder verhindert, und/oder gewünschte chemische Reaktionen auslöst, begünstigt oder katalysiert. In der Prozessatmosphäre kann beispielsweise der relative Sauerstoffgehalt reduziert werden, beispielsweise auf einen Sauerstoffgehalt von 0,005 % bis 0,3 %. Hierfür kann beispielsweise ein Inertgas wie Stickstoff (N₂) in die Prozesskammer eingeleitet werden. Die Prozessatmosphäre kann auch ein Reduktionsmittel, z. B. Methansäure (CH₂O₂) oder Stickstoff und Wasserstoff (N/H) beinhaltendes Formiergas umfassen.

Das Bereitstellen der Prozessatmosphäre kann auch eine Beeinflussung der Druckverhältnisse, d.h. das Erzeugen eines Überdrucks oder eines Unterdrucks umfassen.

Häufig umfassen derartige Anlagen mehrere Prozesskammern, in denen die Bauteile unterschiedlichen Prozessbedingungen oder Prozessatmosphären ausgesetzt sein können. So kann beispielsweise in einer ersten Prozesskammer ein Temperieren der Bauteile oder Baugruppen auf Temperaturen unterhalb der Schmelztemperatur des Lotmaterials, in einer zweiten Prozesskammer ein Erwärmen auf die Löttemperatur und in einer dritten Prozesskammer ein kontrolliertes Abkühlen erfolgen, wobei jeweils die Eigenschaften der Prozessatmosphäre von Prozesskammer zu Prozesskammer variieren können oder auch während der Verweildauer in einer jeweiligen Kammer über die Zeit verändert werden können.

Aufgrund der abgeschlossenen Module bzw. Prozesskammern ruhen die Bauteile, bzw. Werkstückträger, in denen eine Anzahl von Bauteilen simultan miteinander verbunden werden, innerhalb der Module in einem sogenannten ruhenden Prozess im Gegensatz zu einem Fließprozess, der bei nicht-abgeschlossenen Modulen bzw. Prozesskammern möglich ist. Um weiterhin eine Fließfertigung zu gewährleisten, können mehrere Bauteile eines Fließfertigungstransports in einem Werkstückträger angeordnet, d.h. geclustert werden, in einem schrittweise stehenden Prozess durch die Anlage geführt, und hiernach wieder vereinzelt in eine weitere Fließfertigung entlassen werden. Somit kann auch eine, schrittweise stehend geführte Anlage in einem kontinuierlichen Fließfertigungsprozess eingebunden werden. Das Clustern und Vereinzeln kann automatisiert erfolgen, wobei eine erleichterte Qualitätskontrolle und ggf. das Hinzufügen von Abdeckungen und dergleichen, beispielsweise für einen Sinterprozess, möglich ist.

Beim Erwärmen des Lotmaterials oder des Fügewerkstoffs können Bestandteile daraus, z.B. Bindemittel oder Füllstoffe, durch Sublimation oder Verdampfen in die Prozessatmosphäre entweichen, was zu einer ungewollten Verschmutzung oder Kontamination von Bauteilen, der Prozesskammer, darin aufgenommener Komponenten der Anlage oder von nachgeordneten Einrichtungen wie Pumpen, Ventilen oder Rohren führen kann. Auch andere Substanzen wie Flussmittel, Haftmittel zur Fixierung der Bauteile oder Bestandteile der zu verbindenden Bauteile, sowie Reaktionsprodukte der genannten Bestandteile und Atmosphären können zu solchen Verunreinigungen führen.

Bei automatischen Mehrkammer-Anlagen bzw. einer aus Mehrfachmodulen in Modulbauweise bestehenden Anlage kann ein Transport dieser Werkstückträger zwischen den verschieden Modulen bzw. Kammern mit Hilfe von auch als Laufleisten bezeichneten Transportvorrichtungen erfolgen. Die einzelnen Kammern können jeweils mit Vakuumflachschiebern voneinander getrennt sein, um individuell einstellbare Prozessatmosphären bereitzustellen. Diese Vakuumflachschieber bzw. Schleusen sind üblicherweise gekühlt, um Dichtungen vor Hitzeschäden zu schützen.

So ist aus der EP 2 768 625 B1 eine Vorrichtung und ein Verfahren zum Reflow-Löten mit einer Wärmequelle zur Erwärmung von Lotmaterial und einer Unterdrucksteuerungsvorrichtung bekannt. In der Unterdrucksteuerungsvorrichtung wird das Lotmaterial bei einer Temperatur, die zumindest der Liquidustemperatur entspricht, zumindest zweimal in Unterdruck gebracht. Des Weiteren werden Verfahren bzw. Vorrichtungen aufgezeigt, in denen zumindest vor Beginn des Lötvorgangs ein Unterdruck erzeugt wird.

In der DE 102 374 94 B4 ist ein Verfahren zum Löten in der Dampfphase gezeigt, wobei vor, während und/oder nach dem Schmelzen das Lotes auf dem Lötgut in der Dampfphasenzone um das Lötgut herum ein Unterdruck erzeugt wird. In der Patentfamilie der DE 102 374 94 B4 wird weiterhin eine Vorrichtung mit zwei Kammern, d. h. einer ersten Kammer für die Dampfphasenzone und einer zweiten Kammer für den Unterdruck, aufgezeigt, wobei sich entweder die zweite Kammer in der ersten Kammer befindet oder in diese einfahrbar ist.

Die DE 10 2007 005 345 B4 zeigt ein Verfahren und eine Vorrichtung zum Reflow-Löten von mit Lötpaste versehenen Baugruppen in einer Kammer unter Beheizung in der Kammer. Dabei werden die Baugruppen unter Verwendung eines Transportmechanismus in die Kammer befördert, anschließend wird die Kammer abgeschottet. Darauffolgend wird der Druck in der Kammer gegenüber dem atmosphärischen Druck erhöht und die Temperatur durch eine Konvektionsheizung erhöht, um die Lötpaste zur schmelzen. Unter Aufrechterhaltung der Temperatur wird anschließend der Druck auf atmosphärischen Druck zurückgefahren.

Die DE 10 2014 106631 A1, welche den Oberbegriff des Anspruchs 1 offenbart, zeigt eine Vorrichtung zum Herstellen von Lotverbindungen auf Baugruppen aus elektronischen Bauteilen und Leiterplatten und weist ein Transportsystem für diese Baugruppen und eine Mehrzahl von Druckkammern auf. Die Druckkammern weisen jeweils eine eigenständige Heizeinrichtung und eine Druckeinstelleinrichtung auf.

Bei bekannten Anlagen bzw. Verfahren besteht allgemein das Problem, dass Verunreinigungen, insbesondere durch den Lötzusatz und die Atmosphäre, nach der Abkühlung auf den Baugruppen bzw. Bauteilen und/oder in zumindest einer Kammer zurückbleiben. Diese Verunreinigungen führen zu Qualitätseinbußen beim Lötvorgang und können beispielsweise Lunker hervorrufen.

Aufgabe der Erfindung ist es daher, eine Anlage vorzuschlagen, mit welcher Ablagerungen von unerwünschten Substanzen in den unterschiedlichen Modulen sowie an den Lötstellen reduziert oder vermieden werden können.

Weiterhin ist die Aufgabe der Erfindung, eine Anlage zu schaffen, bei welcher die Entstehung von Ablagerungen von unerwünschten Substanzen in den Modulen und am Lötgut reduziert oder vermieden wird. Dabei ist es Aufgabe der Erfindung, insbesondere in geschlossenen Modulen in stehenden Prozessen und unter gesteuertem Atmosphäreneinfluss eine Verweilzeit von unerwünschtem Kondensat an den Wänden des Moduls zu minimieren.

Diese Aufgabe wird durch eine Anlage nach dem unabhängigen Anspruch 1 gelöst. Vorteilhafte Weiterentwicklungen der Erfindung sind Gegenstand der Unteransprüche.

### OFFENBARUNG DER ERFINDUNG

Gegenstand der Erfindung ist eine Lot- und/oder Sinteranlage zum Verbinden von elektronischen Baugruppen nach Anspruch 1 mit einer Transportvorrichtung zum Transport der elektronischen Baugruppen durch die Anlage, umfassend mehrere, Gasdichte abtrennbare Module zum Verbinden der elektronischen Baugruppen miteinander, wobei zumindest ein Modul als Löt- und/oder Sintermodul und ein Modul als Kühlmodul ausgebildet ist.

Es wird vorgeschlagen, dass zwischen dem Löt- oder Sintermodul und dem Kühlmodul ein weiteres Modul angeordnet ist, dass als Softabkühlmodul, zur Abkühlung zwischen einer Prozesstemperatur des Löt- oder Sintermodul und einer Zwischentemperatur, insbesondere unter einer Loterstarrungstemperatur, ausgebildet ist. Das Softabkühlmodul ist daher dem Kühlmodul vorgeschaltet, wodurch zunächst eine Abkühlung auf eine gewünschte bzw. erzielte Temperatur, die insbesondere ungleich der Raumtemperatur ist, erfolgen kann. Dabei liegt die Temperatur, bis zu welcher zumindest das Lotmaterial in der Softabkühlkammer abgekühlt wird, knapp unterhalb der Loterstarrungstemperatur. Verunreinigungen durch den Lötvorgang, insbesondere Lotpastenrückstände, am Bauteil bzw. an der Baugruppe können dadurch vermieden werden, da sich die Verunreinigungen nicht an dem Lotgut absetzen bzw. an den elektronischen Baugruppen kondensieren. Insbesondere können ein Kondensieren und Ablagern der Lotpastenrückstände und/oder aus der Atmosphäre am Bauteil bzw. der Baugruppe sowie in dem Modul selbst zumindest reduziert, insbesondere vermieden werden. Dies wird beispielsweise dadurch erreicht, dass die Lotpastenrückstände im Bereich des Softabkühlmoduls gezielt zur Kondensation gebracht werden und sich bevorzugt dort ablagern. Daher können die Verunreinigungen vor dem endgültigen Abkühlen direkt aus dem Softabkühlmodul entfernt werden und gelangen bevorzugt nicht in das nachgeschaltete Kühlmodul. Ein Anhaften an den Bauteil bzw. Baugruppen kann dadurch vermieden werden, wodurch die Qualität der Lötverbindung verbessert werden kann. Insgesamt kann eine Anlage, insbesondere eine Lötanlage, mit reduzierter Verschmutzung der einzelnen Kammern des Lötprozesses, insbesondere bei der Verwendung von Lötpaste und/oder HCOOH, bereitgestellt werden. Im Zusammenhang mit der dargestellten Erfindung können die Begriffe Kammer und Modul synonym verwendet werden. In dem Lötmodul kann eine Temperatur von beispielsweise 250 °C vorliegen. In dem Kühlmodul werden die elektronischen Baugruppen bevorzugt auf Raumtemperatur, d. h. 20 °C, abgekühlt. Durch das dazwischenliegende Softabkühlmodul kann eine sogenannte erste, softe Abkühlung erfolgen. Diese liegt in einem Bereich knapp unter der Loterstarrungstemperatur. Die Loterstarrungstemperatur liegt im Bereich von 150 °C bis 220 °C. Das Lot kann insbesondere ein Zinn- oder Silberlot (AG) sein. In dem Softabkühlmodul erfolgt daher eine Abkühlung von oberhalb der Liquidustemperatur von beispielsweise 250° auf unter die Solidustemperatur, d.h. der Loterstarrungstemperatur, d.h. eine geführte Abkühlung von oben durch das Schmelzintervall. Vor dem Lötmodul kann ein weiteres Modul angeordnet sein, beispielsweise ein Vorheizmodul und/oder ein Einschleusmodul zum Einbringen der elektronischen Baugruppen in die Anlage.

Um den Montage- sowie Konstruktionsaufwand so gering wie möglich zu halten, kann es vorteilhaft sein, wenn das Softabkühlmodul nicht unter die Druckgeräterichtlinie Richtlinie 2014/68/EU fällt. Als Druckgeräte im Sinne dieser Richtlinie 2014/68/EU gelten beispielsweise Behälter, Rohrleitungen und druckhaltende Ausrüstungsteile bzw. Ausrüstungsteile mit Sicherheitsfunktion mit einem inneren Überdruck von mehr als 0,5 bar. In dem Softabkühlmodul kann daher bevorzugt ein Überdruck von kleiner oder gleich 0,5 bar vorliegen. Das Volumen der Kammer kann beispielhaft bei ca. 50 Liter oder darüber liegen, andere Volumina sind ebenso denkbar. So kann beispielsweise eine interne Fertigungskontrolle entfallen, wodurch der Zeitaufwand reduziert wird. Insbesondere kann ein Druckfluten auf 0,5 barü erfolgen, wobei anschließend dieser Druck gehalten wird. Der Wert 0,5 barü bedeutet ein Überdruck von 0,5 bar über dem atmosphärischen Druck.

Die Temperatur in dem Softabkühlmodul kann gehalten oder erhöht werden, bis der gewünschte Überdruck in dem Softabkühlmodul aufgebaut ist. Das Heizen in der Softabkühlkammer kann allgemein über Konvektion, beispielweise durch Gas, über Kontakterwärmung und/oder über Strahlungserwärmung, insbesondere IR-Licht erfolgen.

Die Anlage umfasst eine übergeordnete Steuerung. Diese kann zur Steuerung aller Module der Anlage dienen. In einer bevorzugten Ausführungsform kann zumindest ein Modul einen eigenen primären Steuerkreis und/oder Sicherheitskreis aufweisen. Dadurch können einzelne Module und/oder einzelne Arbeitsschritte ausgetauscht werden, ohne dass eine komplette Neuprogrammierung der übergeordneten Steuerung erfolgen muss. Insbesondere kann mehr als ein Modul, insbesondere zwei oder mehr Module, einen eigenen Steuerkreis und/oder Sicherheitskreis aufweisen.

In einer bevorzugten Ausführungsform kann das Softabkühlmodul eingerichtet sein, einen Überdruck einer Prozessatmosphäre von 1 bar, insbesondere bis 4,5 bar oder auch mehr, bereitzustellen. Bevorzugt kann in dem Softabkühlmodul der Überdruck von -1 bar (Vakuum) aus einer davor angeordneten Kammer über 1 bar, insbesondere bis 3,5 bar, erhöht werden. Andere Drücke sind ebenso denkbar. Insgesamt sind Druckbereiche sinnvoll, für die das bereits bestehende System der Anlage ausgebildet ist.

In einer bevorzugten Ausführungsform kann das Softabkühlmodul eingerichtet sein, einen Unterdruck unter 1 bar, insbesondere ein Vakuum von -1 bar, bereitzustellen. Dadurch kann beispielsweise ein Vakuumdurchlauf in der Lötanlage erfolgen, der ebenfalls zu einer reduzierten Verschmutzung der Kammern beim Lötprozess, insbesondere mit Paste und/oder Ameisensäure, HCOOH, führt.

In einer bevorzugten Ausführungsform kann das Softabkühlmodul als Überdrucckammer und/oder Vakuumkammer ausgebildet sein. Das Softabkühlmodul kann mit Vakuumflachschiebern von benachbarten Modulen getrennt sein, um die Überruckkammer bzw. Vakuumkammer auszubilden. Diese Vakuumflachschieber bzw. Schleusen können gekühlt sein, um daran angeordnete Dichtungen vor Hitzeschäden zu schützen.

Erfindungsgemäß ist in dem Softabkühlmodul eine Heiz- und/oder eine Kühlvorrichtung zur gesteuerten Temperierung und Abkühlung der elektronischen Baugruppen von 500 °C oder darunter auf eine Temperatur unter der Loterstarrungstemperatur, insbesondere auf 150 °C oder weniger, umfasst, die insbesondere als heiz- und/oder kühlbare Kontaktplatte ausgeformt ist. Ebenso erfolgt eine Temperierung und Abkühlung der elektronischen Baugruppen von einer anderen Temperatur, beispielsweise 250 °C, auf eine Temperatur unter der Loterstarrungstemperatur.

In einer bevorzugten Ausführungsform kann die Kontaktplatte als Heizplatte ausgeführt sein, und eine Abkühlvorrichtung als Gaskühlvorrichtung zur Abkühlung der Kontaktplatte mittels Gasströmung, bevorzugt Stickstoffgasströmung, insbesondere Heliumgasströmung, von einer den elektronischen Baugruppen abgewandten Seite der Heizplatte ausgeführt sein. Dadurch kann ein gesteuertes Abkühlen vorteilhafterweise erreicht werden. Insbesondere kann nach dem Aufbau des gewünschten Drucks ein Abkühlen der Heizplatten über kaltes Stickstoffgas erfolgen. Das Gas kann beispielsweise von unten an die zumindest eine abgeschaltete Heizplatte angeströmt werden. In einer anderen Ausführungsform kann über einen gewählten Abstand zwischen der Heizplatte und den elektronischen Bauteilen eine gewünschte Abkühlung erzielt werden. In allen Fällen erfolgt bevorzugt eine Abkühlung des Lotes bis unterhalb des Erstarrungspunktes. Anschließend können die elektronischen Baugruppen aus dem Softabkühlmodul in das daran anschließende Kühlmodul gefördert werden.

Die zumindest eine Heizplatte kann insbesondere aus Aluminium und/oder Kupfer ausgebildet sein. Bevorzugt ist die Heizplatte aus Kupfer ausgebildet.

In einer bevorzugten Ausführungsform kann die Kontaktplatte in Sandwichbauweise ausgebildet sein. Bevorzugt kann dabei ein Kühlvorgang über Thermoöl erfolgen. Insbesondere kann ein Heizvorgang über ein Heizkabel erfolgen. Eine derartige Sandwichplatte kann eine steuerbare, insbesondere heizbare, Kontaktplatte ausbilden und auch als Softkühlplatte bezeichnet werden. Die Kontaktplatte kann mäanderförmig eingelegte Heizleiter, insbesondere in Form zumindest eines Rohrprofils, umfassen. Weiterhin kann ein Thermoelement, insbesondere ein Substratthermoelement, umfasst sein, das beispielsweise mittig angeordnet und/oder flexibel ausgebildet ist. Die Kontaktplatte kann über ein Hubeinheitensystem mit druckgeregelter Vakuum-Flüssigkeitsdurchführung gesteuert, insbesondere motorisch gesteuert, werden. In einer beispielhaften Ausführungsform können weiterhin ein Ölthermostat, ein Ausdehnungsbehälter, zumindest ein Sicherheitsventil und/oder eine magnetgekoppelte Thermalpumpe umfasst sein. Es kann eine Einmalbefüllung mit Thermoöl erfolgen. Mit der Kühlplatte kann beispielsweise eine Öltemperatur von kleiner oder gleich 185 °C in dem Softabkühlmodel erreicht werden. Dies erfolgt beispielsweise über einen verstärkten wassergekühlten Wärmetauscher als Ölkühler. Die Ölmenge kann beispielsweise über eine doppelte Mantelführung erfasst werden. Insbesondere kann das Thermostat autark arbeiten und/oder Startsignale und Temperaturvorgaben können über eine speicherprogrammierbare Steuerung (SPS) erfolgen. Insbesondere ist aus Praxisgründen eine Wassertemperatur von 16°C bei 35 l/min vorteilhaft.

In einer bevorzugten Ausführungsform kann die Kontaktplatte mechanisch bewegbar sein, insbesondere mit den elektronischen Baugruppen kontaktierbar und beabstandbar sein und/oder die Kontaktplatte kann einen bevorzugt mäanderförmig ausgeführten Gasrechen umfassen. Der Gasrechen kann beispielsweise als N2-Gasrechen für die Softkühlung unter der zumindest einen Heizplatte angeordnet sein.

Erfindungsgemäß ist in dem Softabkühlmodul eine Gasspülvorrichtung zum Spülen der elektronischen Baugruppen, insbesondere mit kaltem Gas, bevorzugt mit kaltem Stickstoffgas, umfasst. Durch die Gasspülvorrichtung können vorteilhafterweise Verunreinigungen aus dem Lötzusatz und/oder der Atmosphäre direkt aus den Softabkühlmodul und damit von den elektronischen Baugruppen weggeleitet werden.

In einer bevorzugten Ausführungsform kann an dem Softabkühlmodul ein Einlassventil zum Einlass des Gases in eine Prozesskammer des Softabkühlmoduls umfasst sein. Dadurch kann eine gewünschte Menge reinen Gases dem Softabkühlmodul direkt zugeführt werden. Insbesondere kann ebenso ein Auslassventil an dem Softabkühlmodul angeordnet sein, um auch eine gewünschte Menge an (verunreinigtem) Gas aus dem Softabkühlmodul abzuleiten. Dadurch kann der Druck innerhalb des Softabkühlmoduls direkt gesteuert werden. Insbesondere kann durch die gezielte Ableitung des Gases eine Ausleitung von Verunreinigungen an dem Softabkühlmodul erfolgen. Diese Verunreinigungen gelangen daher vorteilhafterweise nicht in das nachgeschaltete Kühlmodul und werden so frühzeitig vor der endgültigen Abkühlung der elektronischen Bauteilen bzw. Lötstellen von den Lötstellen entfernt.

In einer bevorzugten Ausführungsform kann außerhalb einer Prozesskammer des Softabkühlmoduls ein Gasauffangbehälter umfasst sein, der mit dem Einlassventil verbunden und zur Aufnahme des aus der Prozesskammer des Softabkühlmoduls ausgeleiteten Gases ausgebildet ist. Der Gasauffangbehälter kann beispielsweise als Pufferspeicher und Vorratstank für ein Reinigungs- und/oder Kühlgas dienen, wobei dies nicht eingrenzend ist. In, vor oder nach diesem Gasauffangbehälter kann eine Reinigungseinrichtung zur Reinigung des aus dem Softabkühlmodul abgeleiteten Gases angeordnet sein. Folglich kann das Gas wiederverwendet werden, wodurch ein nachhaltiger Prozess sowie eine nachhaltige Anlage bereitgestellt werden können.

In einer bevorzugten Ausführungsform können an dem Softabkühlmodul ein Überdruckventil zum Kontrollieren eines Überdrucks und/oder ein Schnellentlüftungsventil umfasst sein. Das Überdruckbegrenzungsventil kann einen Überdruck von größer oder gleich 0,5 bar verhindern. Dadurch kann sichergestellt werden, dass in dem Softabkühlmodul immer lediglich ein Überdruck von kleiner 0,5 bar vorliegt, wobei eine Auslegung nach der Druckgeräterichtlinie entfallen kann.

In einer bevorzugten Ausführungsform kann in dem Softabkühlmodul auch ein Überdruck von 4 bis 6 bar vorliegen. Der Überdruck kann an den Lötprozess angepasst werden.

Erfindungsgemäß erfolgt in dem Kühlmodul eine Abkühlung von einer Temperatur unterhalb der Loterstarrungstemperatur, insbesondere von einer Temperatur unter 150 °C auf Raumtemperatur. Das Kühlmodul kann daher die endgültige Abkühlung der elektronischen Bauteile nach einem gereinigten Zustand durch ein Durchlaufen der elektronischen Baugruppen durch das Softabkühlmodul ermöglichen.

In einer bevorzugten Ausführungsform kann in dem Kühlmodul Normaldruck oder Unterdruck, insbesondere Vakuum, vorliegen. Das Kühlmodul kann von dem Softabkühlmodul durch einen Vakuumflachschieber getrennt sein, um unterschiedliche Druckzustände in zwei benachbarten Modulen zu ermöglichen.

In einer bevorzugten Ausführungsform kann ein weiteres, dem Löt- oder Sintermodul vorgeschaltetes Modul umfasst sein, das als Vorheizmodul ausgebildet ist. Das Vorheizmodul ist bevorzugt vor dem Lötmodul bzw. vor dem Sintermodul angeordnet.

In einer bevorzugten Ausführungsform kann eine Kühlfalle in einer Prozesskammer, bevorzugt in der Prozesskammer des Softabkühlmoduls, insbesondere als Gaskühler im Gasausgangsweg der Prozesskammer, umfasst sein. Die Kühlfalle kann eine Rippenstruktur zum Vergrößern einer Kühloberfläche und um ein Abtropfen von Kondensats zu ermöglichen aufweisen. Weiterhin kann die Kühlfalle ein Abtropfblech aufweisen, das zum Auffangen des Kondensats eingerichtet ist. Das flüssige aufgefangene Kondensat im Abtropfblech kann über das Abtropfblech zu einem Auffangbehälter abgeleitet werden. Die Abfuhr des Kondensats kann durch den kontinuierlichen Ablauf über eine Vakuumpumpleitung verstärkt werden. In einer Ausführungsform kann die Vakuumpumpe insbesondere auch zur Absaugung eines Kühl- und Reinigungsgases verwendet werden. Durch das gezieltes Evakuieren der Vakuumkammer können restlichen Lösemittel verdampfen und Kondensieren an der kalten Kältefalle und werden so gezielt aufgefangen. Die Kühlfalle kann auch als Gaskühler dienen, um die nachgeschalteten Ventile und die nachgeschaltete Pumpentechnik zu schützen.

Insbesondere kann die Kühlfalle wie im Folgenden beschrieben ausgebildet sein.

In einer bevorzugten Ausführungsform kann die Abtrennung der gasdicht abtrennbaren Module bzw. Prozesskammern über Vakuumflachschieber erfolgen, wobei eine Dichtigkeit der Vakuumflachschieber bei einer Druckerhöhung zunimmt und/oder es kann bei einem zu hohen Druck ein Druckausgleich über die Vakuumflachschieber erfolgen. So können die Vakuumflachschieber als Abschottungen ausgebildet sein. Diese können bei Erhöhung des Überdrucks immer dichter abschließen, sodass ein Öffnen unter Überdruck nicht erfolgen kann. Dies kann insbesondere dadurch erreicht werden, dass eine maximale Kraft einer Antriebseinheit das Öffnen nicht ermöglicht. Weiterhin oder alternativ können die Vakuumflachschieber derart angeordnet sein, dass bei zu hohem Innendruck bzw. Überdruck Gas abgelassen werden kann. Dies kann beispielweise derart erfolgen, dass eine Ventilplatte entsprechend verformt, dass Gas in die Atmosphäre ausströmen kann. Vorteilhafterweise kann gleichzeitig keine Umgebungsluft in das Modul, insbesondere in die Softabkühlkammer, eindringen. Vorteilhafterweise kann dadurch die zumindest eine elektronische Baugruppe ohne Schäden durch Sauerstoff die Anlage durchlaufen.

In einer vorteilhaften Ausführungsform können die Vakuumflachschieber über eine Ablaufsteuerung angesteuert werden. Insbesondere kann über die Ablaufsteuerung erreicht werden, dass zu keinem Zeitpunkt Luft bzw. Sauerstoff in die Module, insbesondere in das Lötmodul und in das Softabkühlmodul, gelangt. Dadurch können energetische aufwändige Gasspülvorgänge vermieden werden. Aufgrund der konstanten Prozessatmosphäre ohne Sauerstoff können Verbrennungen bzw. Verunreinigungen durch Sauerstoff von Rückständen aus dem Lötprozess vermieden werden.

Vorteilhafterweise kann ein Verfahren zum Löten mit den folgenden Schritten ablaufen: Evakuieren von verflüssigtem Lotmaterial in dem Modul, insbesondere in dem Lötmodul, Transportieren der elektronischen Baugruppe unter Vakuum in das Softabkühlmodul, wobei die zumindest eine elektronische Baugruppe keinen Temperaturverlust während des Transports erfährt.

Gegenstand der Erfindung ist weiterhin eine Anlage zum Verbinden von elektronischen Baugruppen, insbesondere eine Löt- und/oder Sinteranlage, bevorzugt eine vorbeschriebene Anlage mit einer Softkühlmodul, mit einer Transportvorrichtung zum Transport der elektronischen Baugruppen durch die Anlage, umfassend mehrere, gasdicht abtrennbare Module zum Verbinden der elektronischen Baugruppen miteinander, wobei zumindest ein Modul als Löt- und/oder Sintermodul und ein Modul als Kühlmodul ausgebildet ist. Ein Modul kann vorzugsweise als Trocknungsmodul zum Trocknen von Sinterpaste ausgeführt sein.

Es wird vorgeschlagen, dass in einem Modul, das insbesondere als Löt- oder Sintermodul ausgebildet ist in einer gasdicht verschließbaren Prozesskammer zumindest eine mit den elektronischen Baugruppen kontaktierbare Wärmequelle zum Erwärmen der elektronischen Baugruppen und wenigstens eine Kühlfalle angeordnet ist, die im Betrieb eine Oberflächentemperatur aufweist, die niedriger als eine Betriebstemperatur der Wärmequelle ist.

Diese Anlage kann insbesondere zumindest eine Softkühlkammer umfassen, und die Kühlfalle kann vorteilhaft in der Softkühlkammer angeordnet sein. Alternativ kann die eine, oder auch eine Mehrzahl an Kühlfallen in einem bzw. in mehreren Modulen, insbesondere dem Löt- oder Sintermodul, einem Vorheizmodul und/oder einem Kühlmodul angeordnet sein.

An der Kühlfalle kondensieren oder resublimieren unerwünschte Substanzen, insbesondere Bestandteile von als Lotmaterial verwendeten Lotpasten und deren Reaktionsprodukte, die beim gemeinsamen Erwärmen der Baugruppen und insbesondere des Lotmaterials in die Prozessatmosphäre verdampfen oder sublimieren bzw. aus deren Reaktionsprodukten, welche im Prozess entstehen.

Hierdurch wird bei einer Lötanlage insbesondere die Verwendung von Lotpasten ohne zusätzliche Applikation von Flussmitteln ermöglicht. Die Unterbindung von Oxidation der Lötgutoberflächen sowie die Entfernung bereits vorhandener Oxidschichten kann durch die Einleitung von Reduktionsmitteln in die Prozessatmosphäre erreicht werden. So kann durch Evakuieren und Fluten mit N₂ die Prozesskammer von Luft und somit von O2 gereinigt werden, so dass eine Sauerstofffreiheit erreicht werden kann. Ein Reduktionsmittel entfernt O₂ von der Oberfläche der Baugruppen.

Die Kühlfalle kann auf der Rückseite, d.h. dem Innenraum der Prozesskammer auf die kalte Kammerwand aufgeschraubt werden. Andere Montagearten sowie andere Montageorte sind ebenso denkbar.

In einer bevorzugten Ausführungsform kann in der Prozesskammer eine spezifische Prozessatmosphäre bereitgestellt werden, wobei die Kühlfalle und die Wärmequelle derart zueinander angeordnet sind, dass zumindest während einer spezifischen Betriebsphase Strömungen in der Prozessatmosphäre alleine aufgrund von Konvektion bestehen, welche durch eine Temperaturdifferenz zwischen der Kühlfalle und der Wärmequelle erzeugt wird. In einer weiteren Ausführungsform kann der Mantel, d.h. die Gehäusewandung der Prozesskammer, gekühlt werden. Beispielsweise kann über eine oder mehrere Tieflochbohrung auf die Außenfläche eine dünne Infrarot Carbon Heizfolie mit hoher Leistung aufgebracht werden. Diese beheizt den Mantel der Prozesskammer. Bei Servicearbeiten kann die Heizung abgeschaltet und die Kammer bzw. das Modul gekühlt werden.

In einer bevorzugten Ausführungsform kann die Oberflächentemperatur der Kühlfalle zwischen -196°C (77k) bis zu 150°C, insbesondere 16°C bis 25 °C, betragen, und wobei bevorzugt eine kaskadierbare Oberflächentemperatur der Kühlfalle bereitstellbar ist. Bei einer kaskadierte Kühlfalle kann eine Kaskade mit fallender Temperatur der Kühlfalle bereitgestellt werden, um beispielweise die Mengen des Kondensats nicht zu stark aufzukonzentrieren zu lassen. Dabei kann die Kaskade mit fallenden Temperaturen der Kühlfalle eine erste Stufe der Kaskade mit einer niedrigeren Temperatur als eine zweite Stufe aufweisen, um die Konvektion des Prozessgases in der Prozesskammer zu begünstigen.

In einer bevorzugten Ausführungsform kann zumindest eine Zusatzwärmequelle zum Erwärmen der Prozesskammer vorgesehen sein. Vorteilhafterweise kann eine Beheizung der Kühlfalle dazu verwendet werden, um diese von Kondensaten im Prozess abzureinigen. Hierzu kann in geeigneten Phasen im Verbindungsprozess die Kühlfalle beheizt werden, um die dort angesammelten Kondensate zu verflüssigen bzw. deren Fließeigenschaften zu verbessern. Anschließend kann die Kühlfalle wieder abgekühlt werden, so dass dies zyklisch zu Reinigungszwecken der Kühlfalle durchgeführt werden kann. Die Erwärmung der Kühlfalle kann beispielsweise durch eine Reduzierung des Durchflusses des Kühlwassers bis auf 0m/s erreicht werden.

In einer bevorzugten Ausführungsform kann die Betriebstemperatur der Wärmequelle und/oder der Zusatzwärmequelle zwischen 150°C und 400°C, bzw. bevorzugt zwischen 200°C und 300°C betragen. Die Betriebstemperatur der Kühlfalle und der gewünschte Einfluss der Wärmequelle hängen grundsätzlich vom eingesetzten Prozess und von dem eingesetzten Material und ggf. von dem gewünschten Effekt ab.

In einer bevorzugten Ausführungsform kann zumindest ein, insbesondere eine Mehrzahl von elektronischen Baugruppen, auf einem Werkstückträger angeordnet sein, und bevorzugt von diesen in Richtung Kühlfalle zumindest zeitweise beabstandet sein, sodass insbesondere der Abstand der Baugruppen zur Kühlfalle geringer als der Abstand Werkstückträger zur Kühlfalle ist. Vorteilhafterweise können eine Mehrzahl von Baugruppen auf einem Werkstückträger angeordnet sein. Dabei können die Baugruppen auf dem Werkstückträger räumlich exponiert und in Richtung Kühlfalle beabstandet sein, z.B. erhöht im Werkstückträger gelagert sein, oder in der Höhe verstellbar gelagert sein. Somit kann ein verringerter räumlicher Abstand der Baugruppen zur Kühlfalle erreicht werden, um eine Konvektionswirkung von Verunreinigungen hin zur Kühlfalle zu verbessern.

Auch kann die Kühlfalle in den Bereichen der Baugruppen auf einer der Baugruppen zugewandten Oberfläche Erhöhungen aufweisen, um den räumlichen Abstand zu den Baugruppen zu verringern. Diese Erhöhungen auf dem Werkstückträger und/oder auf der Kühlfalle können variabel, z.B. federbelastet oder mittels Aktuator veränderlich sein, so dass selektiv eine Abstandverringerung nur im aktiven Betrieb der Kühlfalle bereitstellbar ist.

In einer bevorzugten Ausführungsform kann wenigstens ein Teilbereich der Prozesskammer, insbesondere wenigstens eine Wandungsfläche der Prozesskammer und/oder eine Oberfläche einer in der Prozesskammer angeordneten Transportvorrichtung, welche zum Einbringen und/oder Entnehmen von Baugruppen vorgesehen ist, als Temperierzone ausgebildet sein, wobei die Temperierzone im Betrieb eine zwischen der Oberflächentemperatur der Kühlfalle und der Betriebstemperatur der Wärmequelle liegende Temperatur aufweist, wobei die Temperatur der Temperierzone bevorzugt zwischen 50°C und 150°C, insbesondere zwischen 80°C und 120°C beträgt. Die Temperierzone ist bevorzugt im Bereich der Außenseiten der Prozesskammer ausgebildet.

In einer bevorzugten Ausführungsform kann die Prozesskammer über eine Rohrleitung mit einer Evakuierungsvorrichtung verbunden oder verbindbar sein, wobei eine Mündung der Rohrleitung in die Prozesskammer unmittelbar benachbart zu der Kühlfalle vorgesehen ist. Über die Rohrleitung können die kondensierten Rückstände gezielt abgeleitet werden.

In einer bevorzugten Ausführungsform kann die Kühlfalle mehrere, bevorzugt in vertikaler Richtung verlaufende, Kühlrippen aufweisen. Dadurch wird insbesondere die Oberfläche der Kühlfalle vergrößert, wodurch der Wirkungsgrad erhöht wird. Weiterhin können die Kühlrippen gleichzeitig zur Ableitung des Kondensats aus der Kühlfalle dienen. Die Kühlrippen sind daher bevorzugt vertikal ausgerichtet, sodass das Kondensat entlang der Rippen allein durch die Schwerkraft vertikal, und damit auf dem kürzest möglichen Weg, nach unten geleitet werden kann.

In einer bevorzugten Ausführungsform kann unterhalb der Kühlfalle eine Auffangvorrichtung zum Auffangen von an der Kühlfalle erzeugtem Kondensat vorgesehen sein. Die Auffangvorrichtung ist bevorzugt über die komplette Breite bzw. Länge der Kühlrippen angeordnet, sodass das über die Kühlrippen geleitete Kondensat sicher aufgefangen wird. Die Auffangvorrichtung kann beispielsweise als Leitblech ausgebildet sein. Insbesondere ist die Auffangvorrichtung dabei geneigt ausgebildet, sodass ein Gefälle entsteht, über welches das Kondensat gezielt in eine Richtung gelenkt werden kann. Am Ende des Gefälles, d. h. auf einer Seite der Auffangvorrichtung, kann insbesondere eine Öffnung, beispielsweise ein Schlitz oder einzelne Bohrungen, angeordnet sein, um das Kondensat aus der Auffangvorrichtung herauszuleiten.

In einer vorteilhaften Ausführungsform können die Wärmequelle, und/oder der Werkstückträger mit den Baugruppen in Richtung Kühlfalle relativ zueinander bezüglich ihres Abstandes verstellbar sein. Hierdurch kann eine räumliche Annäherung der Baugruppen bzw. Entfernen des Werkstückträgers während einer Kondensatextraktion durch die Kühlfalle erreicht werden.

In einer vorteilhaften Ausführungsform kann der Werkstückträger separat beheizbar sein, so dass verhindert werden kann dass sich dort Kondensat abschlägt, und der Temperaturgradient zur Kühlfalle beibehalten oder auch erhöht werden kann. Dadurch kann der Abtransport von Verunreinigungen gezielt gesteuert werden.

In einer vorteilhaften Ausführungsform kann eine drehzahlgeregelte Extraktions-Vakuumpumpe mit einem Flüssigkeitsabscheider zur Herstellung eines Unterdrucks in der Prozesskammer vorgesehen ist. Durch den Flüssigkeitsabscheider ergibt sich die Möglichkeit, ähnlich wie bei einer Wasserpfeife, das Kondensat zu binden und die abgesaugte Atmosphäre von Kondensat zu reinigen. Die Mündung der Vakuumpumpe in der Prozesskammer kann dabei vorteilhaft im Bereich der Kühlfalle angeordnet sein, um dort sich sammelndes Kondensat abzuziehen.

In einer vorteilhaften Ausführungsform kann zur Einführung und/oder Entnahme der Baugruppen zumindest ein Vakuumflachschieber, insbesondere an zwei gegenüberliegenden Seiten der Prozesskammer zwei beheizbare Vakuumflachschieber vorgesehen sein. Durch die Möglichkeit einer Beheizung der Vakuumflachschieber wird ein Abscheiden von Kondensat an den Schiebern vermieden, so dass diese nicht unerwünschte Kältefallen ausbilden.

Vorteilhaft kann die Gehäusewandung der Prozesskammer und/oder der Vakuumschieber zusätzlich elektrisch beheizt werde, so dass eine definierbare Temperaturdifferenz und Konvektion zur Kühlfalle erreichbar ist, und Gehäuseinnenwandung und Innenfläche der Vakuumschleuse, d.h. des Schiebers nicht mit Kondensat beaufschlagt wird. Dazu bieten sich beispielsweise PTFE Gitter Heizmatte bis 250°C oder Heizmatten aus Textilglasgewebe an, mit Heiztemperaturen bis 450°C. Auch können Infrarot-Heizmatten, beispielsweise aus Gummi oder Carbon-Heizfolien eingesetzt werden, die Temperaturen von beispielsweise 60°C mühelos erreichen können, aber auch für hohe Strahlungsleistung und höheren Temperaturbereichen konfektioniert werden können. Damit kann die Gehäuseinnenwandung und/oder der Vakuumflachschieber zumindest teilweise beschichtet werden.

### ZEICHNUNGEN

Weitere Vorteile ergeben sich aus der vorliegenden Zeichnungen und Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- **Fig.** 1: eine Ausführungsform einer erfindungsgemäßen Anlage in einer isometrischen Ansicht;
- **Fig.** 2: eine Schnittdarstellung einer weiteren Ausführungsform einer erfindungsgemäßen Anlage;
- **Fig.** 3: ein Schaltbild einer Ausführungsform einer erfindungsgemäßen Anlage;
- **Fig.** 4: eine Ausführungsform einer Kühlfalle;
- **Fig.** 5: ein Schaltbild einer weiteren Ausführungsform einer erfindungsgemäßen Anlage;
- **Fig. 6**: eine Draufsicht auf eine Prozesskammer;
- **Fig. 7**: eine Schnittansicht der Prozesskammer aus Fig. 6;
- **Fig. 8**: eine weitere Ansicht der Prozesskammer aus Fig. 6;
- **Fig.** 9: eine Kühlfalle mit Kühlrippen;
- **Fig. 10**: eine weitere Ausführungsform einer Kühlfalle mit Kühlrippen;
- **Fig. 11**: eine Seitenansicht einer weiteren Kühlfalle;
- **Fig. 12**: einen möglichen Kühlkreislauf in einer Kühlfalle;
- **Fig. 13**: ein Aufnahmeelement für die Kühlfalle aus Fog. 12;
- **Fig. 14**: eine Auffangvorrichtung einer Kühlfalle;
- **Fig. 15**: eine Draufsicht auf ein Modul der Lötanlage mit Roboter;
- **Fig. 16**: eine Ausführungsform eines Werkstückträgers;
- **Fig. 17**: eine weitere Ausführungsform einer Kühlfalle;
- **Fig. 18**: eine Ausführungsform eines Aufnahmeelements für die Kühlfalle aus Fig. 17;
- **Fig. 19**: eine Seitenansicht des Aufnahmeelements mit Kühlfalle aus den Figs. 17 und 18;
- **Fig. 20**: eine weitere Ansicht der Ausführung aus Fig. 19;
- **Fig. 21**: eine Schnittansicht der Ausführungsform aus Fig. 19;
- **Fig. 22**: eine Detailansicht der Ausführungsform aus Fig. 20;
- **Fig. 23**: eine isometrische Darstellung des Aufnahmeelements mit Öffnungselement;
- **Fig. 24**: eine Schnittdarstellung durch eine Prozesskammer;
- **Fig. 25**: eine weitere Ausführungsform eines Werkstückträgers;
- **Fig. 26**: eine weitere Ansicht der Ausführungsform aus Fig. 25.

In den Figuren sind gleiche oder gleichartige Komponenten mit gleichen Bezugszeichen beziffert.

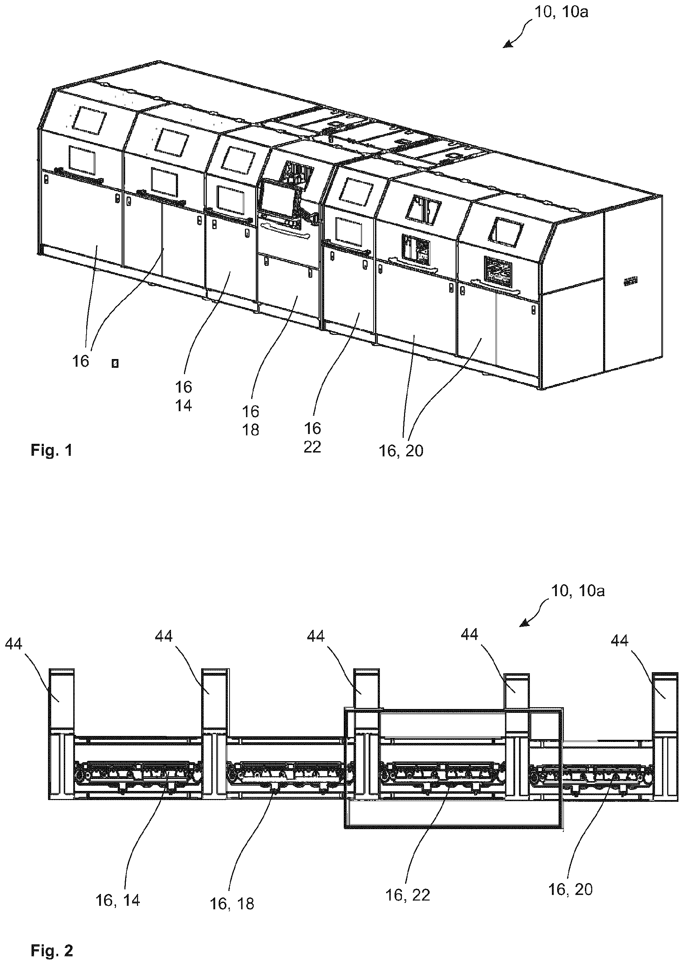

Fig. 1 zeigt eine Ausführungsform einer erfindungsgemäßen Anlage 10 in einer isometrischen Ansicht. Die Anlage 10 kann als Lötanlage 10a ausgebildet sein und mehrere Module 16 umfassen. In dieser Ausführungsform umfasst die Anlage 10 zumindest fünf Module 16, wobei das erste und das letzte Modul 16 jeweils nochmals untereilt sein können. Die mittleren drei Module 16 bilden ein Vorheizmodul 14, ein Löt- oder Sintermodul 18 und ein Softabkühlmodul 22 aus. Das Softabkühlmodul ist zwischen dem Löt- bzw. Sintermodul 18 und dem Kühlmodul 20 angeordnet. Das Kühlmodul 20 bildet das letzte Modul 16 der Anlage 10 in der dargestellten Ausführungsform. Des Weiteren kann in einer nicht dargestellten Ausführungsform ein Entlademodul dem Kühlmodul 20 nachgeschaltet sein. Das in der Darstellung linke Modul 16 kann folglich als Belademodul ausgebildet sein.

In Fig. 2 ist eine Schnittdarstellung einer weiteren Ausführungsform einer erfindungsgemäßen Anlage 10 dargestellt. Dabei sind die Vakuumflachschieber 44 zwischen den einzelnen Modulen 16 erkennbar. Das Gehäuse ist im Gegensatz zu der Ausführungsform aus Fig. 1 nicht dargestellt. Diese Ausführungsform zeigt vier Module 16, ein Vorheizmodul 14, ein Löt- oder Sintermodul 18, ein Softabkühlmodul 22 und ein Kühlmodul 20. Die Module 16 sind in der beschriebenen Reihenfolge nacheinander angeordnet. Das Softabkühlmodul 16 ist mit je einem Vakuumflachschieber 44 von dem Löt- bzw. Sintermodul 18 und dem Kühlmodul 20 räumlich getrennt. In dem Softabkühlmodul 16 kann eine Heizplatte angeordnet sein, wobei die Heizplatte von unten mit kaltem Gas, insbesondere Stickstoff, gekühlt werden kann. Dadurch kann ein Abkühlen der elektronischen Baugruppen bis knapp unterhalb der Loterstarrungstemperatur erreicht werden.

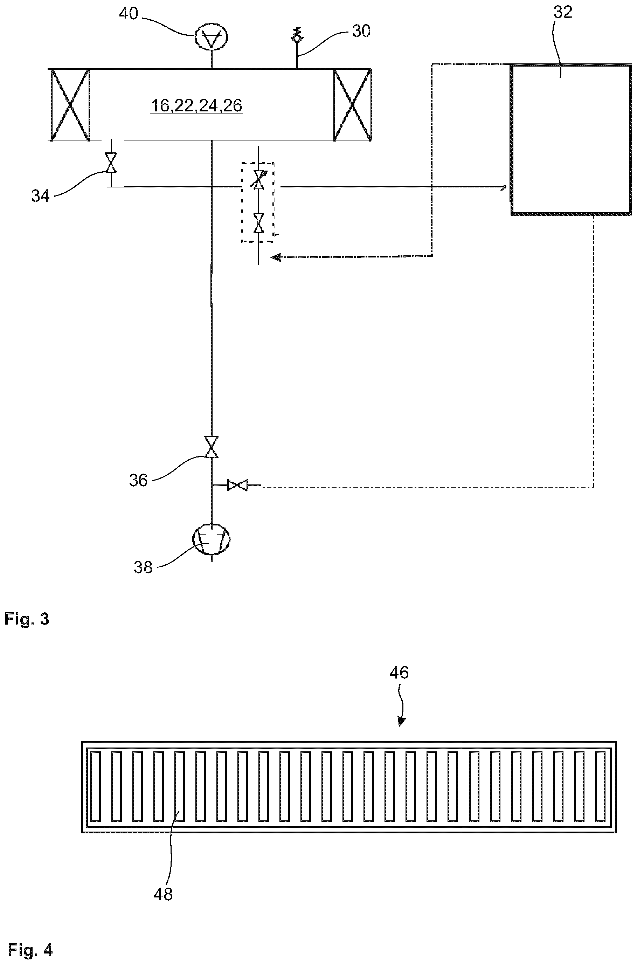

Fig. 3 zeigt ein Schaltbild einer Ausführungsform einer erfindungsgemäßen Anlage 10. Das Softabkühlmodul 22 kann als Überdruckkammer 24 oder als Vakuumkammer 26 ausgebildet sein. An dem Softabkühlmodul 22 ist ein Überdruckventil 30 angeordnet. Des Weiteren ist das Softabkühlmodul 22 über ein Evakuierungsventil 36 mit einer Vorpumpe 38 verbunden. Zum Spülen der elektronischen Baugruppen ist in dieser Ausführungsform ein Gasauffangbehälter 32 vorgesehen, der über ein Einlassventil 28 mit dem Softabkühlmodul 22 verbunden ist. Der Gasauffangbehälter kann beispielsweise das Gas, insbesondere Stickstoff, auffangen, mit dem die elektronischen Baugruppen in dem Softabkühlmodul 22 gespült wurden. Vorteilhafterweise wird das Gas zuvor, nach oder in dem Gasauffangbehälter 2 gereinigt, um danach über eine Zuleitung wieder dem Softabkühlmodul 22 zugeführt zu werden. So kann das Gas wiederverwendet werden. Des Weiteren umfasst das Softabkühlmodul 22 ein Schnellentlüftungsventil 34. Durch den beschriebenen Aufbau kann ein Überdruck, ein Unterdruck oder ein Vakuum in dem Softabkühlmodul 22 kontrolliert werden.

Fig. 4 zeigt eine Ausführungsform einer Kühlfalle 46. Die Kühlfalle 46 kann in der Prozesskammer des Softabkühlmoduls 22 angeordnet sein. Die Kühlfalle 46 weist in dieser Ausführungsform Rippen 46 auf, um eine Kühloberfläche zu vergrößern und um ein Abtropfen von Kondensats zu ermöglichen. Weiterhin kann die Kühlfalle 46 ein Abtropfblech aufweisen (nicht dargestellt), das zum Auffangen des Kondensats eingerichtet ist. Die Kühlfalle 46 kann auch als Gaskühler dienen, um die nachgeschalteten Ventile und die nachgeschaltete Pumpentechnik zu schützen.

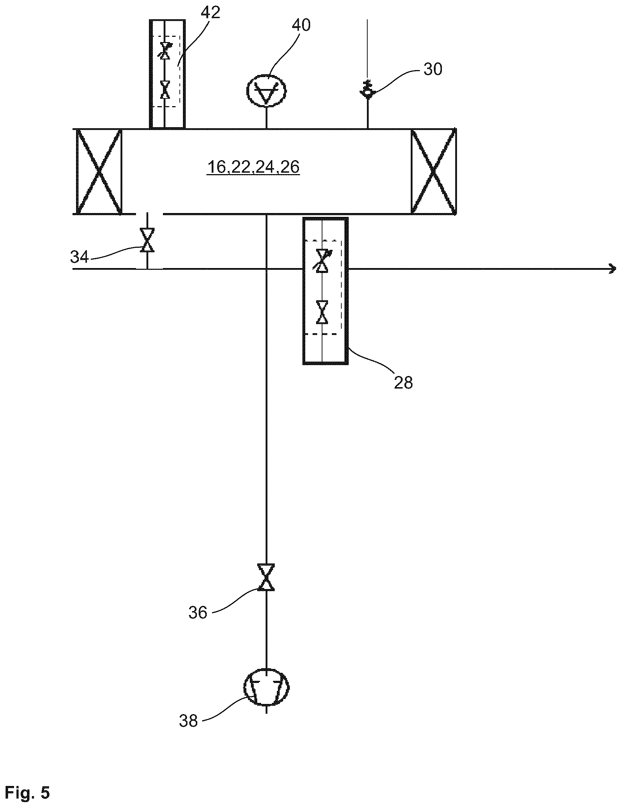

In Fig. 5 ist ein Schaltbild einer weiteren Ausführungsform einer erfindungsgemäßen Anlage 10 dargestellt. Im Unterschied zur Ausführungsform nach Fig. 3 ist ein weiteres Druckregelventil 42 an dem Softabkühlmodul 22 angeordnet. Dieses kann, ebenso wie das Überdruckbegrenzungsventil 30, eine Verbindung mit der Abluft aufweisen.

In all den dargestellten Ausführungsformen kann in dem Softabkühlmodul 22 ein Überdruck erzeugt werden, wobei der Überdruck beispielsweise kleiner als 0,5 bar sein kann, um einem Nachweis nach der Druckgeräterichtlinie zu umgehen. Ebenso kann das Softabkühlmodul 22 nach der Druckgeräterichtlinie ausgelegt werden und einen Überdruck von beispielsweise 3 bar der mehr aufweisen. Über eine Heiz- und oder Kühlvorrichtung in dem Softabkühlmodul 22 kann eine gesteuerte Temperierung bis knapp unterhalb der Loterstarrungstemperatur erfolgen. So können Verunreinigungen im Lot vermieden werden, da diese vor der kompletten Abkühlung bis zur Raumtemperatur in dem nachgeschalteten Kühlmodul 20 bereits im Softabkühlmodul 22 zurückbleiben und sich so nicht auf den elektronischen Baugruppen ansammeln. Vorteilhafterweise wird daher in dem Softabkühlmodul 22 ein Spülgas eingesetzt, mit welchem die Verunreinigungen direkt aus dem Softabkühlmodul 22 entfernt bzw. herausgespült werden.

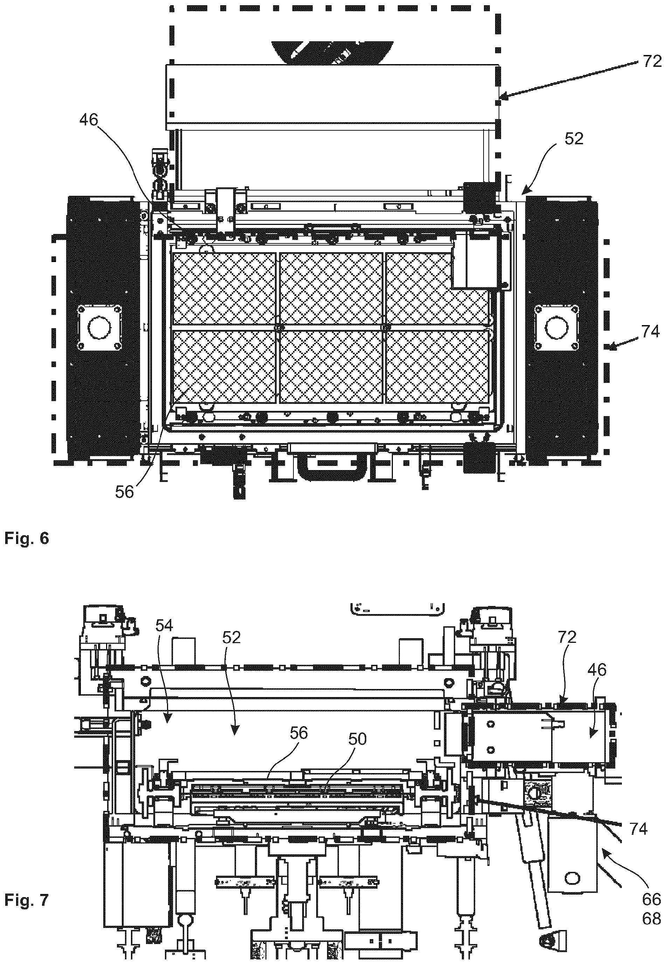

Fig. 6 zeigt eine Draufsicht auf eine Prozesskammer 52. Die Prozesskammer 52 ist bevorzugt als gasdicht verschließbare Prozesskammer 52 ausgebildet und in einem Modul 16 angeordnet, das als Lötmodul 18 ausgebildet ist. In der Prozesskammer 52 sind auf einem Werkstückträger 56 mehrere elektronische Baugruppen angeordnet. Weiterhin ist in der Prozesskammer 52 eine Wärmequelle 50 (dargestellt in Fig. 7) sowie eine Kühlfalle 46 angeordnet. Dadurch kann ein kalter Bereich 72 sowie ein heißer Bereich 74 ausgebildet werden. Bevorzugt ist die Prozesskammer 52 eine Vakuumprozesskammer. Durch die Wärmequelle 50 sowie die Kühlfalle 46 kann in der Prozesskammer 52 eine spezifische Prozessatmosphäre bereitgestellt werden. Dadurch können aufgrund der Anordnung der Kühlfalle 46 und der Wärmequelle 50 zueinander Strömungen in der Prozessatmosphäre allein durch Konvektion entstehen, welche durch eine Temperaturdifferenz zwischen der Kühlfalle 46 und der Wärmequelle 50 erzeugt wird.

Fig. 7 zeigt eine Schnittansicht der Prozesskammer 52 aus Fig. 6. In dieser Ansicht ist die Wärmequelle 50 an der Unterseite der Prozesskammer 52 dargestellt. Bevorzugt befindet sich die Wärmequelle 50 daher unterhalb des Werkstückträgers 56. Zum zusätzlichen Erwärmen der Prozesskammer 52 kann eine Zusatzwärmequelle (nicht dargestellt) angeordnet werden. Um eine optimale Wirkung zu erzielen ist es vorteilhaft, wenn der kalte Bereich 72 soweit wie möglich in die Prozesskammer 52 hineinragt. Durch die Kühlfalle 46 resultiert eine geringere Verschmutzung der Module 16 beim Lötprozess. Dies wird dadurch erreicht, dass das Kondensat aus der Lötpaste aufgefangen und gezielt aus der Anlage geleitet wird. Bevorzugt herrscht dabei in der Prozesskammer 52 ein Druck von kleiner gleich 950 bar. Dies kann beispielsweise durch N2, N2H2 oder HCOOH oder durch Gasgemische erzielt werden. Insbesondere liegt ein ruhendes Gas ohne Zwangsführung vor. Dadurch erfolgt ein Verdampfen der organischen Bestandteile, wobei das heiße Gas mit den organischen Bestandteilen in der Prozesskammer 52 nach oben steigt. Das Temperaturgefälle zwischen den heißen und den kalten Flächen führt jedoch zu einer Konvention des Gases innerhalb der Prozesskammer 52, insbesondere innerhalb der Vakuumprozesskammer. Flüchtige Bestandteile kondensieren daher an den kalten Flächen und werden so in die Kühlfalle 46 geleitet und dort aufgefangen. Weitere Vorteile ergeben sich beispielsweise dadurch, dass Reste des Kondensats auf Flächen mit ca. 100 °C verdampfen, und schließlich über ein Evakuieren der Vakuumprozesskammer gezielt entsorgt werden, beispielsweise durch eine Extraktions-Vakuumpumpe 66 und/oder einen Flüssigkeitsabscheider 68.

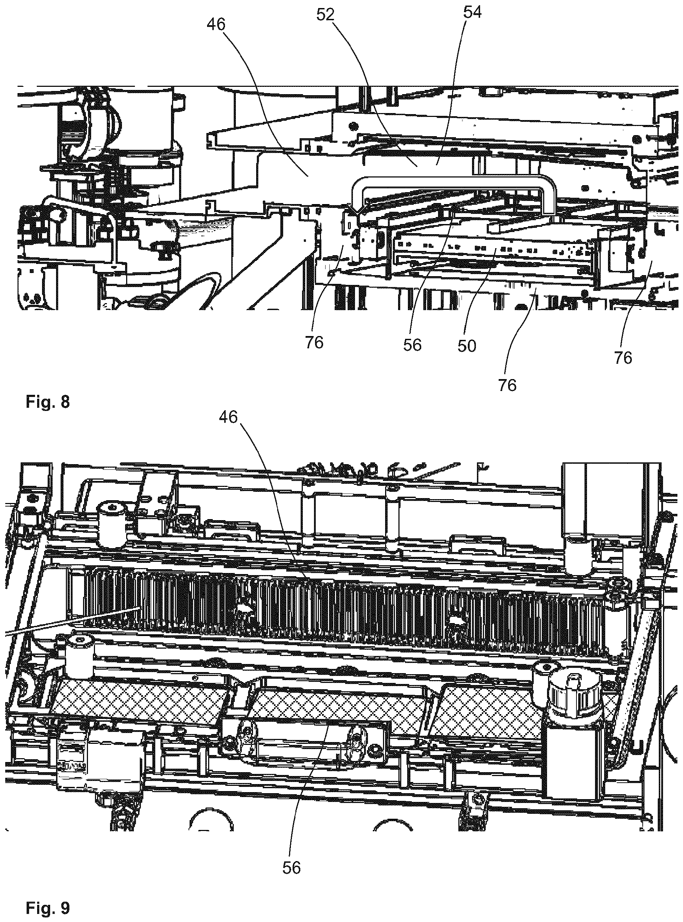

Fig. 8 zeigt eine weitere Ansicht der Prozesskammer 52 aus Fig. 6. Die Flächen, an welche die Reste des Kondensats verdampfen, sind durch die Temperierzonen 76 dargestellt. In einer derartigen Ausführung kann insbesondere eine gezielte Nutzung des Dampfdrucks von Lösemittel ausgenutzt werden. Einige Lösemittel schlagen sich an den Temperierzonen 76 nieder, da der Dampfdruck höher liegt als bei 100 °C mit einem Druck von 950 bar. Durch das gezielte Evakuieren der Prozesskammer 52, insbesondere der Vakuumprozesskammer, verdampfen die Reste des Lösemittel zum Kondensieren ebenso an den kalten Flächen, d. h. in den kalten Bereichen 72, der Kühlfalle 46 und werden daher gezielt aufgefangen. Im Bereich der Kühlfalle 46 kann daher ein Temperaturereich von 2 °C bis 30°C, bevorzugt 16°C bis 25 °C vorliegen. In der Temperierzone 76 können die Temperaturen bei 100 °C liegen. Im Bereich der Wärmequelle 50 sowie an der Oberseite der Prozesskammer 52, beispielsweise durch eine Zusatzwärmequelle 54, können die Temperaturen bei 150 °C bis 300 °C liegen.

Fig. 9 zeigt eine Kühlfalle 46 mit Kühlrippen 48. Die Kühlrippen 48 können an der Innenwand der Prozesskammer 52 angeordnet werden und dienen zum Vergrößern der Kühloberfläche. Weiterhin kann durch die Kühlrippen 48 ein Abtropfen des Kondensats verbessert werden. Die Darstellung zeigt eine Ansicht aus dem Inneren der Prozesskammer 52, wobei ein Werkstückträger 56 auf dem Boden der Prozesskammer 52 angeordnet ist.

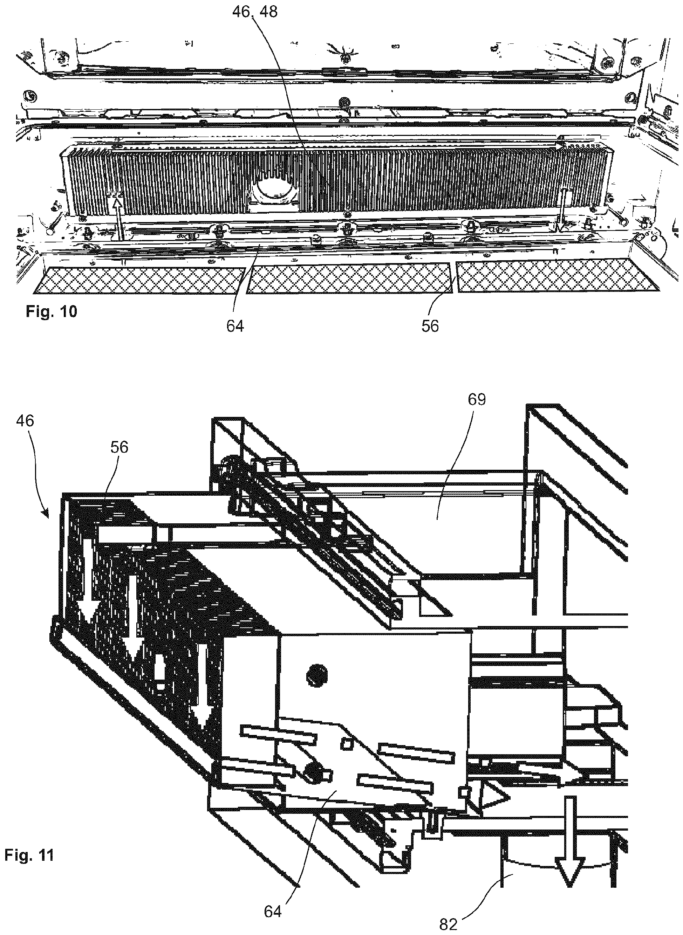

Fig. 10 zeigt eine weitere Ausführungsform einer Kühlfalle 46 mit Kühlrippen 48. Unterhalb der Kühlrippen 48 ist eine Auffangvorrichtung 64 erkennbar, diese ist zum Auffangen des an der Kühlfalle 46 erzeugten Kondensat ausgebildet.

Fig. 11 zeigt eine Seitenansicht einer weiteren Kühlfalle 46. Durch die Pfeilrichtungen ist die Abtropfrichtung bzw. die Fließrichtung des Kondensats dargestellt. Innerhalb der Kühlrippen 48 in der Kühlfalle 46 läuft das Kondensat nach unten und landet auf der Auffangvorrichtung 64. Die Auffangvorrichtung 64 kann beispielsweise als Abtropfblech ausgebildet sein. Über die Auffangvorrichtung 64 fließt das aufgefangene Kondensat in Richtung eines Auffangbehälters 82. Über eine Vakuumpumpenleitung kann eine kontinuierliche Evakuierung unterstützt werden. Das Kondensat beinhaltet insbesondere Lösemittel, ungewollte Ablagerungen und/oder Verschmutzungen.

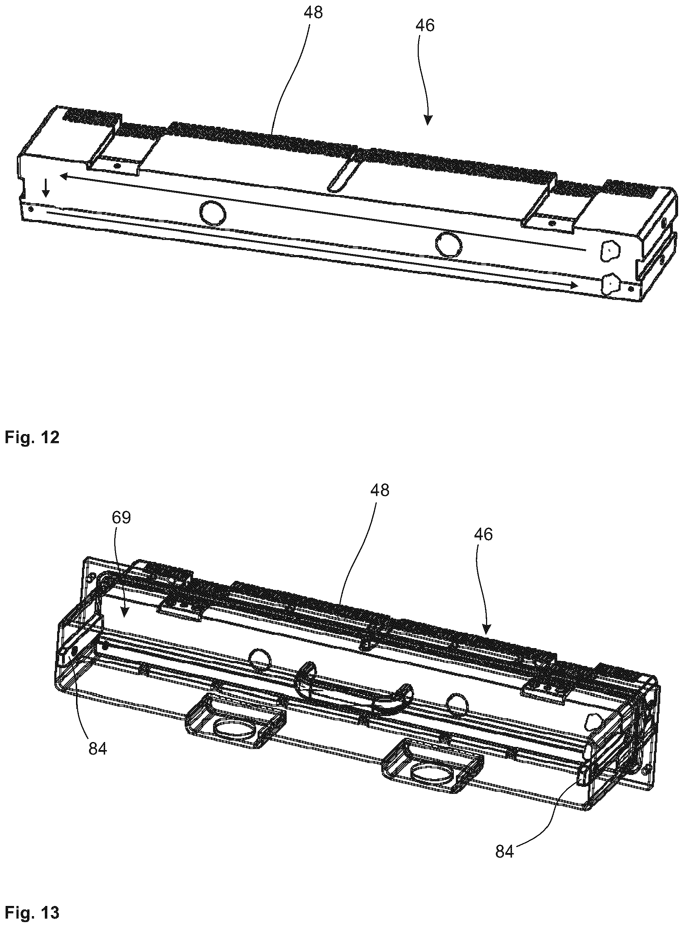

Fig. 12 zeigt einen möglichen Kühlkreislauf in einer Kühlfalle 46, dargestellt durch die Pfeilrichtung. Fig. 13 zeigt ein Aufnahmeelement 69 für die Kühlfalle 46 aus Fig. 12. In einer derartigen Ausführungsform kann die Kühlfalle 40 daher austauschbar montierbar sein. Die Kühlfalle 46 wird von hinten in das Aufnahmeelement 69 eingeschoben, insbesondere über Führungen 84, die an zwei gegenüberliegenden Seiten am Aufnahmeelement 69 angeordnet sind. Insbesondere ist an den Führungen 84 ebenso eine thermische Isolation angeordnet. Das Aufnahmeelement 69 wird direkt an der Prozesskammer 52 (nicht dargestellt) montiert. Ebenso kann das Aufnahmeelement 69 die Prozesskammer 52 selbst ausbilden, wobei die Kühlfalle 46 direkt an der Prozesskammer 52 montiert werden kann.

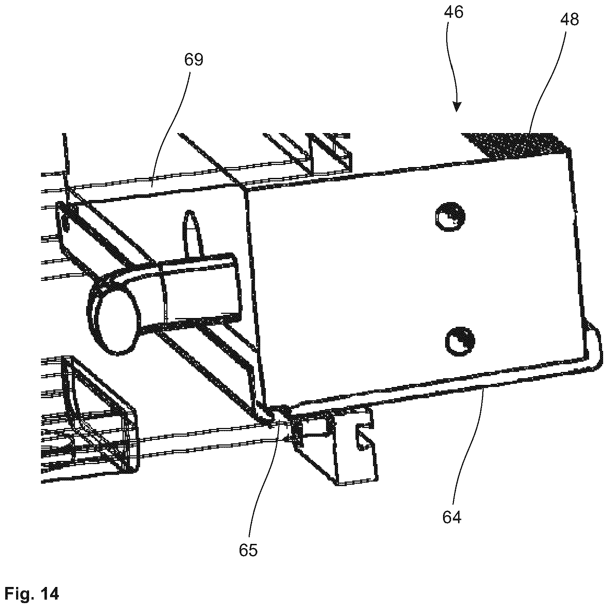

Fig. 14 zeigt eine Auffangvorrichtung 64 einer Kühlfalle 46. Ebenso wie in Fig. 11 ist in dieser Darstellung die Auffangvorrichtung 64 als Abtropfblech ausgebildet, wobei das aufgefangene Kondensat über eine Öffnung 65, in dieser Ausführungsform ausgebildet als Schlitz, nach hinten in das Aufnahmeelement 69 abgeleitet wird.

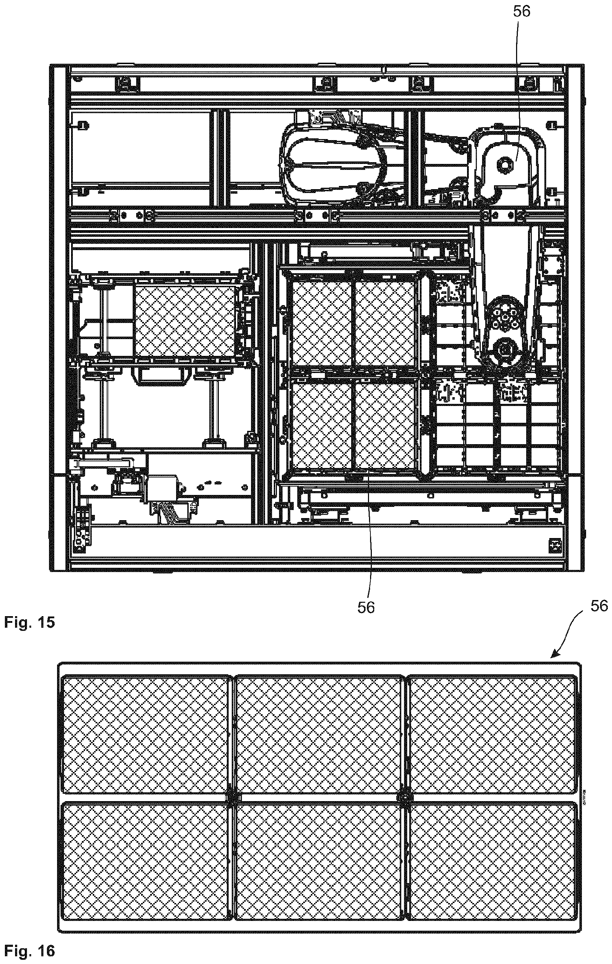

Fig. 15 zeigt eine Draufsicht auf ein Modul 16 der Lötanlage 10a mit Roboter. Das dargestellte Modul 16 kann insbesondere das in Fig. 1 ganz auf der linken Seite dargestellte Modul 16 darstellen, und insbesondere als Beladestation ausgebildet sein. In der Beladestation werden insbesondere die Werkstückträger 56 mit elektronischen Baugruppen 12 beladen, wobei dies in dieser Ausführungsform über einen Roboterarm 78 erfolgen kann.

Fig. 16 zeigt eine Ausführungsform eines Werkstückträgers 56. Dieser ist für sechs elektronische Baugruppen 12 ausgebildet. Ein derartiger Werkstückträger 56 wird insbesondere bei einer Prozesskammer 52 wie in Figs. 6 bis 9 eingesetzt.

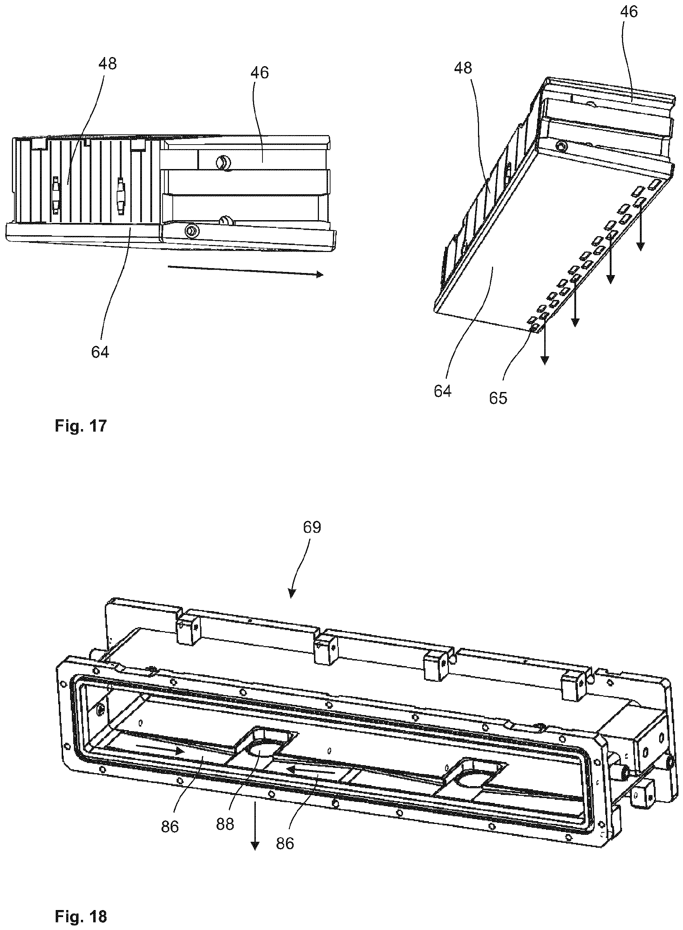

Fig. 17 zeigt eine weitere Ausführungsform einer Kühlfalle 46. Auch in dieser Ausführungsform weist die Kühlfalle 46 eine Auffangvorrichtung 64 auf, die als eine geneigte Ebene an der Unterseite der Kühlfalle 46 verläuft. Im Unterschied zur Darstellung nach Fig. 14 weist die Auffangvorrichtung 64 keinen Schlitz sondern einzelne Öffnungen 65 auf, aus denen das Kondensat aus der Kühlfalle 46 und in das Aufnahmeelement 69 (nicht dargestellt) abgeleitet wird.

Fig. 18 zeigt eine Ausführungsform eines Aufnahmeelements 69 für die Kühlfalle 46 aus Fig. 17. Auf der Unterseite des Aufnahmeelements 69 sind mehrere Schrägen 86 angeordnet, über welche das Kondensat aus den Öffnungen 56 der Kühlfalle 46 geleitet werden kann. Über die Schrägen 86 läuft das Kondensat zu einer Öffnung 88 und wird über die Öffnung 88 aus dem Aufnahmeelement 69 ausgeleitet. In der dargestellten Ausführungsform weist das Aufnahmeelement 69 zwei derartige Öffnungen 88 auf, zu welchen jeweils zwei Schrägen 86 führen. Das Aufnahmeelement 69 bildet mit anderen Worten eine Art Aufnahmebox für die Kühlfalle aus.

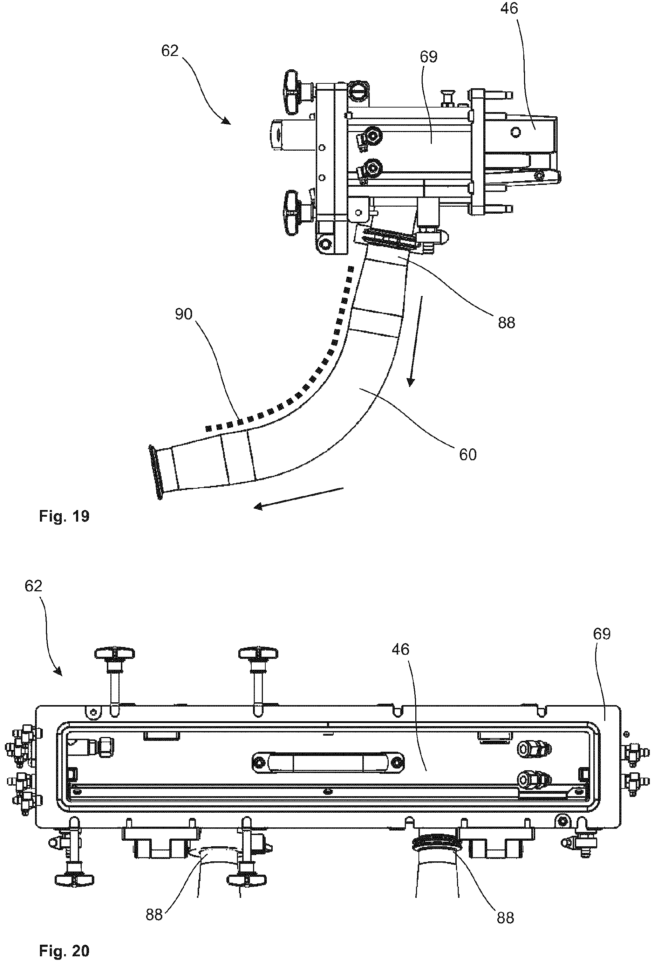

Fig. 19 zeigt eine Seitenansicht des Aufnahmeelements 69 mit Kühlfalle 46 aus den Figs. 17 und 18. Dabei ist erkennbar, dass an der Öffnung 88 eine Rohrleitung 60 angeschlossen ist, welche das Kondensat gezielt abführt. Mit anderen Worten ist daher die Prozesskammer 52 über die Rohrleitung 60 verbunden. Eine Mündung der Rohrleitung 60, welche mit der Öffnung 88 in Verbindung steht, ist unmittelbar benachbart zu der Kühlfalle 46 vorgesehen. Um die Rohrleitung 60 kann eine Heizmanschette 90 angeordnet werden.

Einige derartige Konstruktion mit einem Aufnahmeelement 69 kann ebenso als Evakuierungsvorrichtung 62 bezeichnet werden. Dabei kann die Evakuierungsvorrichtung 62 selbstverständlich anders ausgebildet sein als in Fig. 19 dargestellt.

Fig. 20 zeigt eine weitere Ansicht der Ausführung aus Fig. 19. Es ist erkennbar, dass das Aufnahmeelement 69 zwei Öffnungen 88 an der Unterseite aufweist, die jeweils über eine Rohrleitung 60 angeschlossen sind.

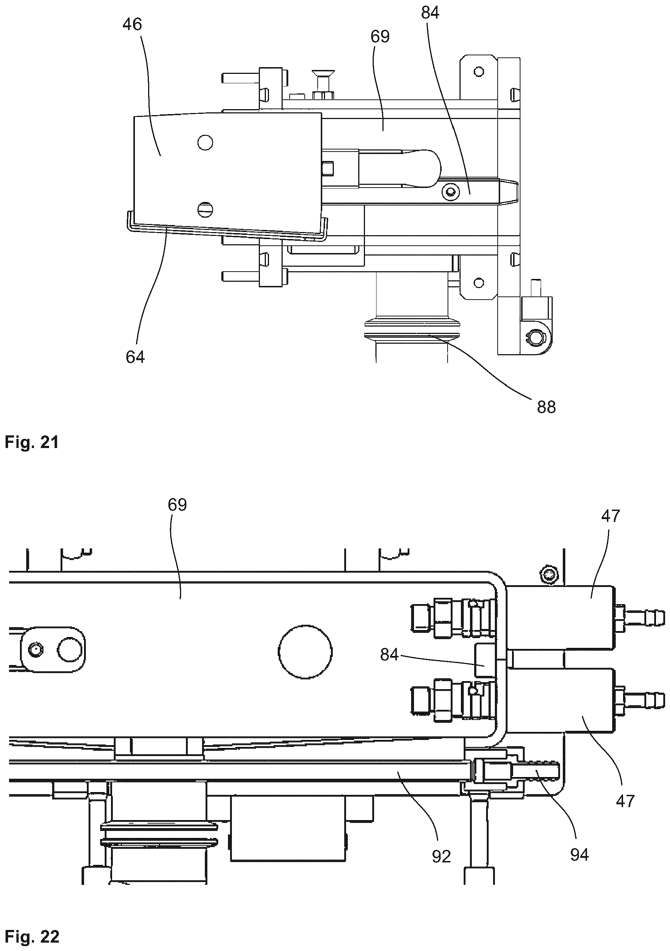

Fig. 21 zeigt eine Schnittansicht der Ausführungsform aus Fig. 19. In dieser Ausführungsform ist erkennbar, wie die Kühlfalle 46 mit der Auffangvorrichtung 64, insbesondere in Form eines Auffangblechs, von einer Seite in das Aufnahmeelement 69 eingesteckt ist. Über Führungen 84 kann die Kühlfalle 46 in dem Aufnahmeelement 69 geführt gehalten werden.

Fig. 22 zeigt eine Detailansicht der Ausführungsform aus Fig. 20. Auf der rechten Seite sind zwei Anschlüsse 47 für die Kühlfalle 46 vorgesehen. An der Unterseite des Aufnahmeelements 69 ist ein Heizelement 92 angeordnet, dessen Anschluss 94 ebenso auf der rechten Seite des Aufnahmeelements 69 liegt. Dieses Heizelement 92 kann beispielsweise eine Zusatzwärmequelle 54 ausbilden.

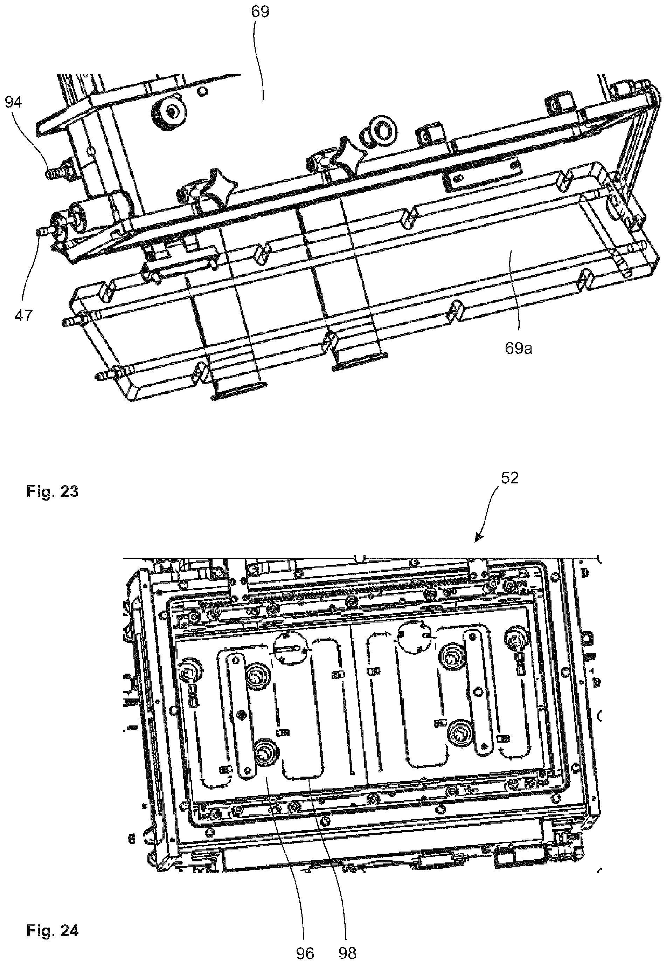

Fig. 23 zeigt eine isometrische Darstellung des Aufnahmeelements 69 mit Öffnungselement 69a. Das Öffnungselement 69a ist schwenkbar an dem Aufnahmeelement 69 gelagert.

Fig. 24 zeigt eine Schnittdarstellung durch eine Prozesskammer 52. Auf der Unterseite der Prozesskammer 52 ist eine Heizplatte 96 vorgesehen, die mit einer Softkühlung 98 versehen ist. Um die Prozesskammer 52 zu verschließen kann diese über einen schwenkbaren Deckel (nicht dargestellt) verfügen, der mit der Prozesskammer 52 verschraubt werden kann. Dadurch kann die Prozesskammer 52 gasdicht ausgebildet sein.

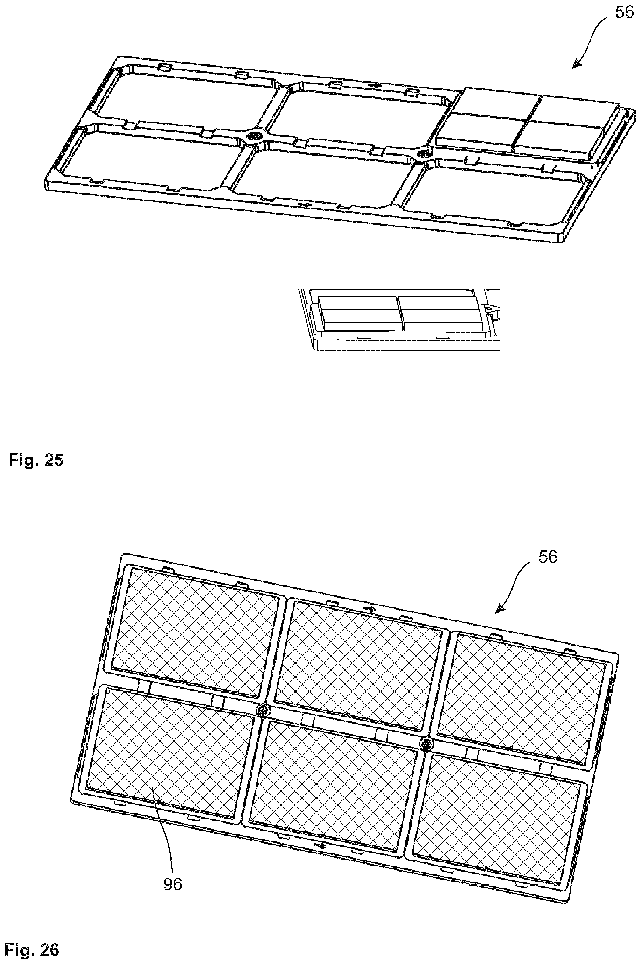

Fig. 25 zeigt eine weitere Ausführungsform eines Werkstückträgers 56. Fig. 26 zeigt eine weitere Ansicht der Ausführungsform aus Fig. 25. Direkt unterhalb der Aufnahmeelemente für die elektronischen Baugruppen 12 (nicht dargestellt) ist die Heizplatte 96 erkennbar. Die Heizplatte 96 kann als Kontaktplatte in Sandwichbauweise ausgebildet sein. Ein Kühlvorgang kann über Thermoöl und/oder ein Heizkabel erfolgen. Eine derartige Sandwichplatte kann eine steuerbare und heizbare Kontaktplatte ausbilden und auch als Softkühlplatte bezeichnet werden. Zur Softkühlung sind in der Heizplatte 92 mäanderförmig eingelegte Heizleiter 98 umfasst. Weiterhin kann ein Thermoelement, insbesondere ein Substratthermoelement, umfasst sein, das beispielsweise mittig angeordnet und/oder flexibel ausgebildet ist.

### Bezugszeichenliste

- 10: Anlage
- 10a: Lötanlage
- 12: elektronischen Baugruppen
- 14: Vorheizmodul
- 16: Modul
- 18: Löt- oder Sintermodul
- 20: Kühlmodul
- 22: Softabkühlmodul
- 24: Überdruckkammer
- 26: Vakuumkammer
- 28: Einlassventil
- 30: Überdruckventil
- 32: Gasauffangbehälter
- 34: Schnellentlüftungsventil
- 36: Evakuierventil
- 38: Vorpumpe
- 40: Drucküberwachungskammer
- 42: Druckregelventil
- 44: Vakuumflachschieber
- 46: Kühlfalle
- 47: Anschluss Kühlfalle
- 48: Rippen/Kühlrippen

- 50: Wärmequelle
- 52: Prozesskammer
- 54: Zusatzwärmequelle
- 56: Werkstückträger
- 58: Transportvorrichtung
- 60: Rohrleitung
- 62: Evakuierungsvorrichtung
- 64: Auffangvorrichtung
- 65: Öffnung
- 66: Extraktions-Vakuumpumpe
- 68: Flüssigkeitsabscheider
- 69: Aufnahmeelement
- 69a: Öffnungselement für Aufnahmeelement
- 72: Kalter Bereich
- 74: Heißer Bereich
- 76: Temperierzone
- 78: Roboterarm
- 80: Kühlelement
- 82: Auffangbehälter
- 84: Führungen
- 86: Schräge
- 88: Öffnung
- 90: Heizmanschette
- 92: Heizelement für Aufnahmeelement
- 94: Anschluss für Heizelement
- 96: Heizplatte
- 98: Heizleiter

## Patentansprüche

1. Löt- und/oder Sinteranlage (10a) zum Verbinden von elektronischen Baugruppen (12), mit einer Transportvorrichtung zum Transport der elektronischen Baugruppen (12) durch die Anlage (10a), umfassend mehrere, gasdicht abtrennbare Module (16) zum Verbinden der elektronischen Baugruppen (12) miteinander, wobei zumindest ein Modul (16) als Löt- und/oder Sintermodul (18) und ein Modul (16) als Kühlmodul (20) ausgebildet ist, **dadurch gekennzeichnet, dass** die Löt- und/oder Sinteranlage eine übergeordnete Steuerung zur Steuerung der Module umfasst, wobei zwischen dem Löt- oder Sintermodul (18) und dem Kühlmodul (20) ein weiteres Modul (16) angeordnet ist, das als Softabkühlmodul (22), zur Abkühlung zwischen einer Prozesstemperatur des Löt- oder Sintermoduls (18) und einer Zwischentemperatur unter einer Loterstarrungstemperatur ausgebildet ist, wobei in dem Softabkühlmodul (22) eine Heiz- und/oder eine Kühlvorrichtung zur gesteuerten Temperierung und Abkühlung der elektronischen Baugruppen (12) von 500 °C oder darunter auf die Zwischentemperatur unter der Loterstarrungstemperatur, welche im Bereich von 220 °C bis 150 °C liegt, umfasst ist, wobei in dem Softabkühlmodul (22) eine Gasspülvorrichtung zum Spülen der elektronischen Baugruppen (12), insbesondere mit kaltem Gas, bevorzugt mit kalten Stickstoffgas, umfasst ist.

2. Löt- und/oder Sinteranlage (10a) nach Anspruch 1, **dadurch gekennzeichnet, dass** das Softabkühlmodul (22) eingerichtet ist, einen Überdruck einer Prozessatmosphäre von 1 bar, insbesondere bis 4.5 bar, bereitzustellen.

3. Löt- und/oder Sinteranlage (10a) nach Anspruch 1 oder 2, **dadurch gekennzeichnet, dass** das Softabkühlmodul (22) eingerichtet ist, einen Unterdruck unter 1 bar, insbesondere ein Vakuum, bereitzustellen.

4. Löt- und/oder Sinteranlage (10a) nach einem der vorhergehenden Ansprüche, **dadurch gekennzeichnet, dass** das Softabkühlmodul (22) als Überdruckkammer (24) und/oder Vakuumkammer (26) ausgebildet ist.

5. Löt- und/oder Sinteranlage (10a) nach einem der vorhergehenden Ansprüche, **dadurch gekennzeichnet, dass** die Heiz- und/oder Kühlvorrichtung als heiz- und/oder kühlbare Kontaktplatte ausgeformt ist.

6. Löt- und/oder Sinteranlage (10a) nach Anspruch 5, **dadurch gekennzeichnet, dass** die Kontaktplatte als Heizplatte ausgeführt ist, und eine Abkühlvorrichtung als Gaskühlvorrichtung zur Abkühlung der Kontaktplatte mittels Gasströmung, insbesondere Stickstoffgasströmung, von einer den elektronischen Baugruppen (12) abgewandten Seite der Heizplatte ausgeführt ist.

7. Löt- und/oder Sinteranlage (10a) nach Anspruch 5, oder 6, **dadurch gekennzeichnet, dass** die Kontaktplatte mechanisch bewegbar ist, insbesondere mit den elektronischen Baugruppen (12) kontaktierbar und beabstandbar ist und/oder die Kontaktplatte einen bevorzugt mäanderförmig ausgeführten Gasrechen umfasst.

8. Löt- und/oder Sinteranlage (10a) nach Anspruch 1, **dadurch gekennzeichnet, dass** an dem Softabkühlmodul (22) ein Einlassventil (28) zum Einlass des Gases in eine Prozesskammer des Softabkühlmoduls (22) umfasst ist.

9. Löt- und/oder Sinteranlage (10a) nach Anspruch 1 oder 8 **dadurch gekennzeichnet, dass** außerhalb einer Prozesskammer des Softabkühlmoduls (22) ein Gasauffangbehälter (32) umfasst ist, der mit dem Einlassventil (28) verbunden und zur Aufnahme des aus der Prozesskammer des Softabkühlmoduls (22) ausgeleiteten Gases ausgebildet ist.

10. Löt- und/oder Sinteranlage (10a) nach einem der vorhergehenden Ansprüche, **dadurch gekennzeichnet, dass** an dem Softabkühlmodul (22) ein Überdruckventil (30) zum Kontrollieren eines Überdrucks und/oder ein Schnellentlüftungsventil (34) umfasst ist.

11. Löt- und/oder Sinteranlage (10a) nach einem der vorhergehenden Ansprüche, **dadurch gekennzeichnet, dass** in dem Softabkühlmodul (22) ein Überdruck von 4 bis 6 bar vorliegt.

12. Löt- und/oder Sinteranlage (10a) nach einem der vorhergehenden Ansprüche, **dadurch gekennzeichnet, dass** in dem Kühlmodul (20) eine Abkühlung von einer Temperatur unterhalb der Loterstarrungstemperatur auf Raumtemperatur erfolgt, insbesondere von einer Temperatur unter 200 °C auf Raumtemperatur.

13. Löt- und/oder Sinteranlage (10a) nach einem der vorhergehenden Ansprüche, **dadurch gekennzeichnet, dass** in dem Kühlmodul (20) Normaldruck oder Unterdruck, insbesondere Vakuum vorliegt.

14. Löt- und/oder Sinteranlage (10a) nach einem der vorhergehenden Ansprüche, **dadurch gekennzeichnet, dass** ein weiteres, dem Löt- oder Sintermodul (18) vorgeschaltetes Modul (16) umfasst ist, das als Vorheizmodul (14) ausgebildet ist.

15. Löt- und/oder Sinteranlage (10a) nach einem der vorhergehenden Ansprüche, **dadurch gekennzeichnet, dass** eine Kühlfalle (46) in der Prozesskammer des Softabkühlmoduls (22), insbesondere als Gaskühler im Gasausgangsweg der Prozesskammer, umfasst ist.

16. Löt- und/oder Sinteranlage (10a) nach einem der vorhergehenden Ansprüche, **dadurch gekennzeichnet, dass** die Abtrennung der gasdicht abtrennbaren Module (16) über Vakuumflachschieber (44) erfolgt, wobei eine Dichtigkeit der Vakuumflachschieber (44) bei einer Druckerhöhung zunimmt und/oder dass bei einem zu hohen Druck ein Druckausgleich über die Vakuumschieber (44) erfolgt.

17. Löt- und/oder Sinteranlage (10a) nach Anspruch 1, **dadurch gekennzeichnet, dass** in einem Modul (16), das insbesondere als Löt- oder Sintermodul (18), oder als Softabkühlmodul (22) ausgebildet ist, in einer gasdicht verschließbaren Prozesskammer (52) zumindest eine mit den elektronischen Baugruppen (12) kontaktierbare Wärmequelle (50) zum Erwärmen der elektronischen Baugruppen (12) und wenigstens eine Kühlfalle (46) angeordnet ist, die im Betrieb eine Oberflächentemperatur aufweist, die niedriger als eine Betriebstemperatur der Wärmequelle (50) ist.

18. Löt- und/oder Sinteranlage (10a) nach Anspruch 17, **dadurch gekennzeichnet, dass** in der Prozesskammer (52) eine spezifische Prozessatmosphäre bereitgestellt wird, wobei die Kühlfalle (46) und die Wärmequelle (50) derart zueinander angeordnet sind, dass zumindest während einer spezifischen Betriebsphase Strömungen in der Prozessatmosphäre alleine aufgrund von Konvektion bestehen, welche durch eine Temperaturdifferenz zwischen der Kühlfalle (46) und der Wärmequelle (50) erzeugt wird.

19. Löt- und/oder Sinteranlage (10a) nach Anspruch 17 oder 18, **dadurch gekennzeichnet, dass** die Oberflächentemperatur der Kühlfalle (46) zwischen -196°C (77k) und 150°C, insbesondere 16°C bis 25 °C, beträgt, und wobei bevorzugt eine kaskadierbare Oberflächentemperatur der Kühlfalle (46) bereitstellbar ist.

20. Löt- und/oder Sinteranlage (10a) nach einem der Ansprüche 17 bis 19, **dadurch gekennzeichnet, dass** zumindest eine Zusatzwärmequelle (54) zum Erwärmen der Prozesskammer (52) vorgesehen ist.

21. Löt- und/oder Sinteranlage (10a) nach einem der Ansprüche 17 bis 20, **dadurch gekennzeichnet, dass** die Betriebstemperatur der Wärmequelle (50) und/oder der Zusatzwärmequelle (54) zwischen 150°C und 400°C, bzw. bevorzugt zwischen 200°C und 300°C beträgt.

22. Löt- und/oder Sinteranlage (10a) nach einem der Ansprüche 17 bis 21, **dadurch gekennzeichnet, dass** zumindest ein, insbesondere eine Mehrzahl von Baugruppen (12), auf einem Werkstückträger (56) angeordnet sind, und bevorzugt von diesen in Richtung Kühlfalle (46) zumindest zeitweise beabstandet sind, sodass der Abstand der Baugruppen (12) zur Kühlfalle (46) geringer als der Abstand Werkstückträger (56) zur Kühlfalle (46) ist.

23. Löt- und/oder Sinteranlage (10a) nach einem der Ansprüche 17 bis 22, **dadurch gekennzeichnet, dass** wenigstens ein Teilbereich der Prozesskammer (52), insbesondere wenigstens eine Wandungsfläche der Prozesskammer (52) und/oder eine Oberfläche einer in der Prozesskammer (56) angeordneten Transportvorrichtung (58), welche zum Einbringen und/oder Entnehmen von Bauteilen vorgesehen ist, als Temperierzone ausgebildet ist, wobei die Temperierzone im Betrieb eine zwischen der Oberflächentemperatur der Kühlfalle (46) und der Betriebstemperatur der Wärmequelle (50) liegende Temperatur aufweist, wobei die Temperatur der Temperierzone bevorzugt zwischen 50°C und 150°C, insbesondere zwischen 80°C und 120°C beträgt.

24. Löt- und/oder Sinteranlage (10a) nach einem der Ansprüche 17 bis 23, **dadurch gekennzeichnet, dass** die Prozesskammer (52) über eine Rohrleitung (60) mit einer Evakuierungsvorrichtung (62) verbunden oder verbindbar ist, wobei eine Mündung der Rohrleitung (60) in die Prozesskammer (52) unmittelbar benachbart zu der Kühlfalle (46) vorgesehen ist.

25. Löt- und/oder Sinteranlage (10a) nach einem der Ansprüche 17 bis 24, **dadurch gekennzeichnet, dass** die Kühlfalle (46) mehrere, bevorzugt in vertikaler Richtung verlaufende, Kühlrippen (48) aufweist.

26. Löt- und/oder Sinteranlage (10a) nach einem der Ansprüche 17 bis 25, **dadurch gekennzeichnet, dass** unterhalb der Kühlfalle (46) eine Auffangvorrichtung (64) zum Auffangen von an der Kühlfalle (46) erzeugtem Kondensat vorgesehen ist.

27. Löt- und/oder Sinteranlage (10a) nach Anspruch 22, **dadurch gekennzeichnet, dass** die Wärmequelle (50), und/oder der Werkstückträger (56) mit den Baugruppen (12) in Richtung Kühlfalle (46) relativ zueinander bezüglich ihres Abstandes verstellbar sind.

28. Löt- und/oder Sinteranlage (10a) nach Anspruch 22, **dadurch gekennzeichnet, dass** der Werkstückträger (56) separat beheizbar ist.

29. Löt- und/oder Sinteranlage (10a) nach einem der Ansprüche 17 bis 28, **dadurch gekennzeichnet, dass** eine drehzahlgeregelte Extraktions-Vakuumpumpe (66) mit einem Flüssigkeitsabscheider (68) zur Herstellung eines Unterdrucks in der Prozesskammer (52) vorgesehen ist.

30. Löt- und/oder Sinteranlage (10a) nach einem der Ansprüche 17 bis 29, **dadurch gekennzeichnet, dass** zur Einführung und/oder zur Entnahme der Baugruppen (12) zumindest einen beheizbaren Vakuumflachschieber, insbesondere an zwei gegenüberliegenden Seiten der Prozesskammer (52) beheizbare Vakuumflachschieber vorgesehen sind.

## Claims

1. Soldering and/or sintering system (10a) for connecting electronic assemblies (12), with a transport device for conveying the electronic assemblies (12) through the system (10a), comprising a plurality of gas-tightly separable modules (16) for connecting the electronic assemblies (12) to one another, wherein at least one module (16) is designed as a soldering and/or sintering module (18) and one module (16) as a cooling module (20), **characterized in that** the soldering and/or sintering system comprises a higher-level control for controlling the modules, wherein between the soldering or sintering module (18) and the cooling module (20) a further module (16) is arranged that is designed as a soft cooling module (22) for cooling between a process temperature of the soldering or sintering module (18) and an intermediate temperature below a solder solidification temperature, wherein in the soft cooling module (22) a heating and/or a cooling device is comprised for controlled temperature adjustment and cooling down of the electronic assemblies (12) from 500 °C or below to the intermediate temperature below the solder solidification temperature, which is in the range from 220 °C to 150 °C, wherein in the soft cooling module (22) a gas purging device for purging the electronic assemblies (12), in particular using cold gas, preferably with cold nitrogen gas, is comprised.

2. Soldering and/or sintering system (10a) according to claim 1, **characterized in that** the soft cooling module (22) is configured to provide a positive pressure for a process atmosphere of 1 bar, in particular up to 4.5 bar.

3. Soldering and/or sintering system (10a) according to claim 1 or 2, **characterized in that** the soft cooling module (22) is configured to provide a negative pressure of below 1 bar, in particular a vacuum.

4. Soldering and/or sintering system (10a) according to any of the preceding claims, **characterized in that** the soft cooling module (22) is designed as a positive pressure chamber (24) and/or vacuum chamber (26).

5. Soldering and/or sintering system (10a) according to any of the preceding claims, **characterized in that** the heating and/or a cooling device is designed as a heatable and/or coolable contact plate.

6. Soldering and/or sintering system (10a) according to claim 5, **characterized in that** the contact plate is designed as a heating plate, and a cooling device as a gas cooling device for cooling down the contact plate by means of a gas flow, in particular a nitrogen gas flow, from a side of the heating plate facing away from the electronic assemblies (12).

7. Soldering and/or sintering system (10a) according to claim 5 or 6, **characterized in that** the contact plate is mechanically movable, in particular can be brought into contact with and kept at a distance from the electronic assemblies (12) and/or the contact plate comprises a gas rack preferably designed in meandering form.

8. Soldering and/or sintering system (10a) according to claim 1, **characterized in that** an inlet valve (28) for admitting the gas into a process chamber of the soft cooling module (22) is comprised on the soft cooling module (22).

9. Soldering and/or sintering system (10a) according to claim 1 or 8, **characterized in that** a gas collection container (32) is comprised outside a process chamber of the soft cooling module (22) which is connected to the inlet valve (28) and is designed to receive the gas extracted from the process chamber of the soft cooling module (22).

10. Soldering and/or sintering system (10a) according to any of the preceding claims, **characterized in that** a positive pressure valve (30) for checking a positive pressure and/or a quick bleed valve (34) is comprised on the soft cooling module (22).

11. Soldering and/or sintering system (10a) according to any of the preceding claims, **characterized in that** a positive pressure of 4 to 6 bar prevails in the soft cooling module (22).

12. Soldering and/or sintering system (10a) according to any of the preceding claims, **characterized in that** cooling down from a temperature below the solder solidification temperature to room temperature takes place in the cooling module (20), in particular from a temperature below 200 °C to room temperature.

13. Soldering and/or sintering system (10a) according to any of the preceding claims, **characterized in that** a normal pressure or negative pressure, in particular a vacuum, prevails in the cooling module (20).

14. Soldering and/or sintering system (10a) according to any of the preceding claims, **characterized in that** a further module (16) connected in front of the soldering or sintering module (18) is comprised that is designed as a preheating module (14).

15. Soldering and/or sintering system (10a) according to any of the preceding claims, **characterized in that** a cold trap (46) is comprised in the process chamber of the soft cooling module (22), in particular as a gas cooler in the gas outlet path of the process chamber.

16. Soldering and/or sintering system (10a) according to any of the preceding claims, **characterized in that** the separation of the gas-tightly separable modules (16) is achieved using vacuum insertable gate valves (44), wherein a tightness of the vacuum insertable gate valves (44) increases as the pressure increases and/or pressure equalization using the vacuum insertable gate valves (44) takes place when the pressure is too high.

17. Soldering and/or sintering system (10a) according to claim 1, **characterized in that** in a module (16) designed in particular as a soldering or sintering module (18) or as a soft cooling module (22) in a gas-tightly sealable process chamber (52) at least one heat source (50) contactable with the electronic assemblies (12) for heating the electronic assemblies (12) and at least one cold trap (46) are arranged, the latter having in operation a surface temperature which is lower than an operating temperature of the heat source (50).

18. Soldering and/or sintering system (10a) according to claim 17, **characterized in that** a specific process atmosphere is provided in the process chamber (52), wherein the cold trap (46) and the heat source (50) are arranged relative to one another such that at least during a specific operating phase currents are present in the process atmosphere solely due to convection, which is generated by a temperature difference between the cold trap (46) and the heat source (50).

19. Soldering and/or sintering system (10a) according to claim 17 or 18, **characterized in that** the surface temperature of the cold trap (46) is between -196 °C (77k) and 150 °C, in particular 16 °C to 25 °C, and wherein a cascadable surface temperature of the cold trap (46) is preferably providable.

20. Soldering and/or sintering system (10a) according to any of claims 17 to 19, **characterized in that** at least one additional heat source (54) for heating the process chamber (52) is provided.

21. Soldering and/or sintering system (10a) according to any of claims 17 to 20, **characterized in that** the operating temperature of the heat source (50) and/or of the additional heat source (54) is between 150 °C and 400 °C, or preferably between 200 °C and 300 °C.

22. Soldering and/or sintering system (10a) according to any of claims 17 to 21, **characterized in that** at least one and in particular a plurality of assemblies (12) is arranged on a workpiece carrier (56) and preferably at a distance therefrom in the direction of the cold trap (46) at least at times, such that the distance of the assemblies (12) to the cold trap (46) is less than the distance of the workpiece carrier (56) to the cold trap (46).

23. Soldering and/or sintering system (10a) according to any of claims 17 to 22, **characterized in that** at least one partial area of the process chamber (52), in particular at least one wall surface of the process chamber (52) and/or a surface of a transport device (58) arranged in the process chamber (56) and provided to insert and/or remove assemblies, is designed as a temperature adjustment zone, wherein said temperature adjustment zone has during operation a temperature between the surface temperature of the cold trap (46) and the operating temperature of the heat source (50), wherein the temperature of the temperature adjustment zone is preferably between 50°C and 150°C, in particular between 80°C and 120°C.

24. Soldering and/or sintering system (10a) according to any of claims 17 to 23, **characterized in that** the process chamber (52) is connected or connectable via a pipeline (60) to an evacuation device (62), wherein an outlet of the pipeline (60) into the process chamber (52) is provided immediately adjacent to the cold trap (46).

25. Soldering and/or sintering system (10a) according to any of claims 17 to 24, **characterized in that** the cold trap (46) has a plurality of cooling fins (48) preferably extending in the vertical direction.

26. Soldering and/or sintering system (10a) according to any of claims 17 to 25, **characterized in that** a collection device (64) is provided underneath the cold trap (46) to collect condensate generated at the cold trap (46).

27. Soldering and/or sintering system (10a) according to claim 22, **characterized in that** the heat source (50) and/or the workpiece carrier (56) with the assemblies (12) are adjustable in their distances relative to one another in the direction of the cold trap (46).

28. Soldering and/or sintering system (10a) according to claim 22, **characterized in that** the workpiece carrier (56) is separately heatable.

29. Soldering and/or sintering system (10a) according to any of claims 17 to 28, **characterized in that** a speed-controlled extraction vacuum pump (66) with a liquid separator (68) is provided for creating a negative pressure in the process chamber (52).

30. Soldering and/or sintering system (10a) according to any of claims 17 to 29, **characterized in that** at least one heatable vacuum insertable gate valve, in particular two heatable vacuum insertable gate valves at two opposite sides of the process chamber (52) are provided for insertion and/or removal of the assemblies (12).

## Revendications

1. Installation de brasage et/ou de frittage (10a) pour relier des composants électroniques (12), avec un dispositif de transport pour le transport des composants électroniques (12) à travers l'installation (10a), comprenant plusieurs modules (16) séparables de manière étanche au gaz pour relier entre eux les composants électroniques (12), sachant qu'au moins un module (16) est conçu sous forme de module de brasage et/ou de frittage (18) et un module (16) sous forme de module de refroidissement (20), **caractérisée en ce que** l'installation de brasage et/ou de frittage comprend une commande supraordonnée pour commander les modules, sachant qu'est disposé, entre le module de brasage ou de frittage (18) et le module de refroidissement (20), un autre module (16) qui est conçu comme module de refroidissement doux (22) pour refroidir entre une température de processus du module de brasage ou de frittage (18) et une température intermédiaire en dessous d'une température de solidification de la brasure, sachant que dans le module de refroidissement doux (22) est compris un dispositif de chauffage et/ou refroidissement pour la mise en température et le refroidissement commandés des composants électroniques (12) de 500 °C ou en dessous à la température intermédiaire sous la température de solidification de la brasure qui se situe dans une plage comprise entre 220 °C et 150 °C, sachant que dans le module de refroidissement doux (22) est compris un dispositif de rinçage à gaz pour rincer les composants électroniques (12), notamment avec du gaz froid et de préférence, avec de l'azote froid.

2. Installation de brasage et/ou de frittage (10a) selon la revendication 1, **caractérisée en ce que** le module de refroidissement doux (22) est conçu pour fournir une surpression d'une atmosphère de processus de 1 bar, notamment jusqu'à 4,5 bar.

3. Installation de brasage et/ou de frittage (10a) selon la revendication 1 ou 2, **caractérisée en ce que** le module de refroidissement doux (22) est conçu pour fournir une dépression inférieure à 1 bar, notamment un vide.

4. Installation de brasage et/ou de frittage (10a) selon l'une des revendications précédentes, **caractérisée en ce que** le module de refroidissement doux (22) est conçu sous forme de chambre hyperbare (24) et/ou de chambre à vide (26).

5. Installation de brasage et/ou de frittage (10a) selon l'une des revendications précédentes, **caractérisée en ce que** le dispositif de chauffage et/ou de refroidissement a la forme d'une plaque de contact chauffable et/ou refroidissable.

6. Installation de brasage et/ou de frittage (10a) selon la revendication 5, **caractérisée en ce que** la plaque de contact est conçue comme plaque de chauffe, et qu'un dispositif de refroidissement est conçu comme dispositif de refroidissement au gaz pour le refroidissement de la plaque de contact au moyen d'un flux de gaz, notamment d'un flux d'azote, depuis un côté de la plaque de chauffe, opposé aux composants électroniques (12).

7. Installation de brasage et/ou de frittage (10a) selon la revendication 5 ou 6, **caractérisée en ce que** la plaque de contact est déplaçable mécaniquement, notamment qu'elle peut être mise en contact et éloignée des composants électroniques (12) et/ou que la plaque de contact comprend un répartiteur de gaz conçu de préférence sous forme de méandre.

8. Installation de brasage et/ou de frittage (10a) selon la revendication 1, **caractérisée en ce qu'**une soupape d'admission (28) pour faire entrer le gaz dans une chambre de processus du module de refroidissement doux (22) est comprise sur le module de refroidissement doux (22).

9. Installation de brasage et/ou de frittage (10a) selon la revendication 1 ou 8, **caractérisée en ce qu'**à l'extérieur d'une chambre de processus du module de refroidissement doux (22) est compris un récupérateur de gaz (32) qui est relié à la soupape d'admission (28) et est conçu pour récupérer le gaz s'écoulant de la chambre de processus du module de refroidissement doux (22).

10. Installation de brasage et/ou de frittage (10a) selon l'une des revendications précédentes, **caractérisée en ce qu'**est compris sur le module de refroidissement doux (22) une soupape de surpression (30) pour contrôler une surpression et/ou une soupape d'échappement rapide (34).

11. Installation de brasage et/ou de frittage (10a) selon l'une des revendications précédentes, **caractérisée en ce qu'**une surpression de 4 à 6 bar est présente dans le module de refroidissement doux (22).

12. Installation de brasage et/ou de frittage (10a) selon l'une des revendications précédentes, **caractérisée en ce qu'**a lieu, dans le module de refroidissement (20), un refroidissement d'une température en dessous de la température de solidification de la brasure à la température ambiante, notamment d'une température inférieure à 200 °C à la température ambiante.

13. Installation de brasage et/ou de frittage (10a) selon l'une des revendications précédentes, **caractérisée en ce qu'**une pression normale ou une dépression, notamment un vide, est présente dans le module de refroidissement (20).

14. Installation de brasage et/ou de frittage (10a) selon l'une des revendications précédentes, **caractérisée en ce qu'**est compris un autre module (16) connecté en amont du module de brasage ou de frittage (18) qui est conçu sous forme de module de préchauffage (14).

15. Installation de brasage et/ou de frittage (10a) selon l'une des revendications précédentes, **caractérisée en ce qu'**est compris un piège cryogénique (46) dans la chambre de processus du module de refroidissement doux (22), notamment comme refroidisseur de gaz dans la voie de sortie de gaz de la chambre de processus.

16. Installation de brasage et/ou de frittage (10a) selon l'une des revendications précédentes, **caractérisée en ce que** la séparation des modules (16) séparables de manière étanche au gaz a lieu au moyen de robinets plats à vide (44), sachant qu'une étanchéité des robinets plats à vide (44) augmente en cas de hausse de la pression et/ou qu'un équilibrage de pression a lieu via les robinets à vide (44) en cas de pression trop élevée.

17. Installation de brasage et/ou de frittage (10a) selon la revendication 1, **caractérisée en ce que** dans un module (16) qui est conçu notamment sous forme de module de brasage ou de frittage (18) ou sous forme de module de refroidissement doux (22), est disposée dans une chambre de processus (52) verrouillable de manière étanche au gaz au moins une source de chaleur (50) pouvant être mise en contact avec les composants électroniques (12), pour chauffer les composants électroniques (12) et au moins un piège cryogénique (46) qui présente en service une température de surface inférieure à une température de service de la source de chaleur (50).

18. Installation de brasage et/ou de frittage (10a) selon la revendication 17, **caractérisée en ce que** dans la chambre de processus (52) est fournie une atmosphère de processus spécifique, sachant que le piège cryogénique (46) et la source de chaleur (50) sont disposés l'un par rapport à l'autre de sorte qu'au moins pendant une phase de service spécifique existent des flux dans l'atmosphère de processus rien qu'en raison de convection générée par une différence de température entre le piège cryogénique (46) et la source de chaleur (50).

19. Installation de brasage et/ou de frittage (10a) selon la revendication 17 ou 18, **caractérisée en ce que** la température de surface du piège cryogénique (46) est comprise entre -196 °C (77 K) et 150 °C, notamment entre 16 °C et 25 °C, et sachant que de préférence une température de surface cascadable du piège cryogénique (46) peut être fournie.

20. Installation de brasage et/ou de frittage (10a) selon l'une des revendications 17 à 19, **caractérisée en ce qu'**au moins une source de chaleur supplémentaire (54) est prévue pour chauffer la chambre de processus (52).

21. Installation de brasage et/ou de frittage (10a) selon l'une des revendications 17 à 20, **caractérisée en ce que** la température de service de la source de chaleur (50) et/ou de la source de chaleur supplémentaire (54) est comprise entre 150°C et 400 °C ou, de préférence, entre 200 °C et 300 °C.

22. Installation de brasage et/ou de frittage (10a) selon l'une des revendications 17 à 21, **caractérisée en ce qu'**au moins un composant, notamment une pluralité de composants (12), sont disposés sur un porte-pièces (56) et sont éloignés au moins temporairement de celui-ci dans le sens du piège cryogénique (46) de sorte que l'écart entre les composants (12) et le piège cryogénique (46) est inférieur à l'écart entre le porte-pièces (56) et le piège cryogénique (46).

23. Installation de brasage et/ou de frittage (10a) selon l'une des revendications 17 à 22, **caractérisée en ce qu'**au moins une zone partielle de la chambre de processus (52), notamment au moins une surface de paroi de la chambre de processus (52) et/ou une surface d'un dispositif de transport (58) disposé dans la chambre de processus (56), qui est prévu pour amener et/ou retirer les composants, est conçue comme zone de mise en température, sachant que la zone de mise en température en service présente une température comprise entre la température de surface du piège cryogénique (46) et la température de service de la source de chaleur (50), sachant que la température de la zone de mise en température est comprise de préférence entre 50 °C et 150 °C, notamment entre 80 °C et 120 °C.

24. Installation de brasage et/ou de frittage (10a) selon l'une des revendications 17 à 23, **caractérisée en ce que** la chambre de processus (52) est reliée ou reliable à un dispositif d'évacuation (62) via une conduite (60), sachant qu'une embouchure de la conduite (60) dans la chambre de processus (52) est prévue directement au voisinage du piège cryogénique (46).

25. Installation de brasage et/ou de frittage (10a) selon l'une des revendications 17 à 24, **caractérisée en ce que** le piège cryogénique (46) présente plusieurs ailettes de refroidissement (48) s'étendant de préférence dans le sens vertical.

26. Installation de brasage et/ou de frittage (10a) selon l'une des revendications 17 à 25, **caractérisée en ce que** sous le piège cryogénique (46) est prévu un dispositif de récupération (64) pour récupérer le condensat produit sur le piège cryogénique (46).

27. Installation de brasage et/ou de frittage (10a) selon la revendication 22, **caractérisée en ce que** la source de chaleur (50), et/ou le porte-pièces (56) avec les composants (12) sont réglables en direction du piège cryogénique (46), l'un par rapport à l'autre concernant leur écart.

28. Installation de brasage et/ou de frittage (10a) selon la revendication 22, **caractérisée en ce que** le porte-pièces (56) est chauffable séparément.

29. Installation de brasage et/ou de frittage (10a) selon l'une des revendications 17 à 28, **caractérisée en ce qu'**une pompe à vide d'extraction régulée en vitesse (66) avec un séparateur de liquide (68) est prévue pour générer une dépression dans la chambre de processus (52).

30. Installation de brasage et/ou de frittage (10a) selon l'une des revendications 17 à 29, **caractérisée en ce que** pour amener et/ou retirer les composants (12) est prévu au moins un robinet plat à vide chauffable, notamment des robinets plats à vide chauffables sur les deux côtés opposés de la chambre de processus (52).
